(19) Europäisches Patentamt / European Patent Office / Office européen des brevets

(11) **EP 4 535 489 A1**

(12) **EUROPEAN PATENT APPLICATION**

(43) Date of publication:
**09.04.2025 Bulletin 2025/15**

(21) Application number: **24197931.9**

(22) Date of filing: **02.09.2024**

(51) International Patent Classification (IPC):
**H01M 10/0562** (2010.01)   **H01M 10/052** (2010.01)
**H01M 12/08** (2006.01)

(52) Cooperative Patent Classification (CPC):
**H01M 10/0562; H01M 10/052; H01M 12/08;**
H01M 2300/0068; H01M 2300/0071;
H01M 2300/0077; H01M 2300/008;
H01M 2300/0091

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.09.2023 KR 20230129565**

(71) Applicant: **SAMSUNG SDI CO., LTD.
Yongin-si, Gyeonggi-do 17084 (KR)**

(72) Inventor: **CHOI, Wonsung
16678 Suwon-si (KR)**

(74) Representative: **Elkington and Fife LLP
Prospect House
8 Pembroke Road
Sevenoaks, Kent TN13 1XR (GB)**

(54) **MIXED SOLID-STATE IONIC CONDUCTOR, SOLID-STATE ELECTROLYTE, CATHODE AND ELECTROCHEMICAL DEVICE INCLUDING THE SAME, AND METHOD OF PREPARING THE MIXED SOLID-STATE IONIC CONDUCTOR**

(57) A mixed solid-state ionic conductor including: a compound represented by Formula 1; and a salt represented by Formula 2,

Formula 1    $MaM'_bXcY'_dZ_e$

Formula 2    $M''(PO_4)_g$

wherein, in Formula 1 and Formula 2, M, M', M'', X, Y', Z, a, b, c, d, e, f, and g are as described in the specification.

FIG. 1A

EP 4 535 489 A1

**Description**

FIELD OF THE INVENTION

The disclosure relates to a mixed solid-state ionic conductor, a solid-state electrolyte, a cathode and an electrochemical device, which include the mixed solid-state ionic conductor, and a method of preparing the mixed solid-state ionic conductor.

BACKGROUND OF THE INVENTION

To achieve high energy density, electrochemical devices such as all-solid-state secondary batteries use lithium metal and the like as an anode, and use a solid-state ionic conductor as an electrolyte for safe operation.

Depending on the type of anion, oxide-based (i.e., oxide-containing) solid-state ionic conductors, sulfide-based (i.e., sulfide-containing) solid-state ionic conductors, and halide-based (i.e., halide-containing) solid-state ionic conductors have been widely studied as solid-state ionic conductors. However, although oxide-based solid-state ionic conductors have high chemical stability, they have lower performance than sulfide-based solid-state ionic conductors in terms of ionic conductivity and formability. Sulfide-based solid-state ionic conductors have high ionic conductivity and good moldability, but react with water to produce toxic gases. Halide-based solid-state ionic conductors do not produce toxic gases and are highly adaptable to the environment, but they still have unsatisfactory ionic conductivity and lack stability during battery assembly.

Therefore, there is still a need for a solid-state ionic conductor of a novel composition having improved ionic conductivity and improved charging/discharging characteristics.

SUMMARY OF THE INVENTION

Provided is a mixed solid-state ionic conductor with improved ionic conductivity and improved charging and discharging characteristics.

Provided is a solid-state electrolyte including the mixed solid-state ionic conductor.

Provided is a cathode including the mixed solid-state ionic conductor.

Provided is an electrochemical device including the mixed solid-state ionic conductor.

Provided is a method of preparing the mixed solid-state ionic conductor.

Additional aspects will be set forth in part in the description which follows and, in part, will be apparent from the description, or may be learned by practice of the presented embodiments of the disclosure.

According to an aspect of the disclosure, a mixed solid-state ionic conductor includes: a compound represented by Formula 1; and a salt represented by Formula 2,

$$\text{Formula 1} \qquad M_a M'_b X_c Y'_d Z_e$$

wherein in Formula 1,

M is an alkali metal having an oxidation number of +1,

M' is one or more of a metal cation having an oxidation number of +2, +3, +4, +5, or +6,
X is one or more of a halogen anion having an oxidation number of -1,
Y' is an anion having an oxidation number of -1,
Z is an anion having an oxidation number of -3,
$0.5 \leq a \leq 7$, $0.5 \leq b \leq 2$, $0 < c \leq 6$, $0 \leq d \leq 6$, $0 \leq e \leq 6$, and

$0 < c + d + e \leq 6$, and

$$\text{Formula 2} \qquad M''_f(PO_4)_g$$

wherein in Formula 2,

M" is the same metal cation as M' in Formula 1 or a different metal cation having an oxidation number of +2, +3, +4, +5, or +6 and having an ionic radius within $\pm$ 10% of an ionic radius of M', and
$0 < f \leq 3$, and $0 < g \leq 10$.

According to an embodiment, the ionic radius of the metal cation of M' in Formula 1 may be 70 picometers to 100 picometers.

According to an embodiment, M' in Formula 1 may be a cation of one or more metals of Ti, Zr, Hf, V, Nb, Ta, Al, Ga, In, La, Ce, Pr, Nd, Pm, Sm, Eu, Gd, Tb, Dy, Ho, Er, Tm, Yb, Y, or Lu.

According to an embodiment, Y' in Formula 1 may be one or more of an anion of $SO_3^-$, $CH_3COO^-$, $CN^-$, $NO_3^-$, $NO_2^-$, $H_2PO_4^-$, $PF_6^-$, $OH^-$, $BF_4^-$, $N(CF_3SO_2)_2^-$, $CF_3CO_2^-$, $CF_3SO_3^-$, $C(CF_3SO_2)_3^-$, $HCO_3^-$, $ClO_4^-$, $HSO_4^-$, or $SCN^-$.

According to an embodiment, Z in Formula 1 may be one or more of an anion of $(BO_4)^{3-}$, $(BO_3)^{3-}$, $(PO_4)^{3-}$, $[Fe(CN)_6]^{3-}$; or $[Ag(S_2O_3)_2]^{3-}$.

According to an embodiment, impurities (e.g., a first composition) may not be included.

According to an embodiment, impurities may be further included in an amount of more than about 0 wt% and less than about 5 wt% based on 100 wt% of the total amount of the mixed solid-state ionic conductor.

According to an embodiment, the impurities may include one or more of a compound represented by Formula 3, a salt represented by Formula 4, or a combination thereof,

$$\text{Formula 3} \qquad (M1)_p(X1)_q(Y'1)_r(Z1)_s$$

wherein

M1 may be one or more of a metal cation having an oxidation number of +2, +3, +4, +5, or +6,
X1 may be one or more of a halogen anion having an oxidation number of -1,
Y'1 may be an anion with an oxidation number of -1,
Z1 may be an anion with an oxidation number of -3, and
$0.5 \leq p \leq 2$, $0 < q \leq 6$, $0 \leq r \leq 6$, $0 \leq s \leq 6$, and $0 < q + r + s \leq 6$.

$$\text{Formula 4} \qquad (M2)_t(PO_4)_v$$

wherein

M2 may be an alkali metal having an oxidation number of +1,

$0.5 \leq t \leq 7$, and $0 < v \leq 7/3$.

According to an embodiment, the compound of Formula 1 and the salt of Formula 2 may each be a nanoparticle having a particle size of about 1 nm to about 100 nm.

According to an embodiment, the mixed solid-state ionic conductor may have a distorted rock-salt type crystal structure.

According to an embodiment, the compound of Formula 1 has an octahedral structure in which M' is a central metal cation which is coordinated with six X halogen anions, or in which M' is a central metal cation which is coordinated with six X halogen anions, some of which are substituted with one or more of an anion of Y' and Z, and the salt of Formula 2 may be located in the space around the octahedral structure.

According to an embodiment, the mixed solid-state ionic conductor may have a layered crystal structure.

According to an embodiment, the amount of the salt of Formula 2 may be about 5 weight percent (wt%) to about 30 wt% based on 100 wt% of the total weight of the mixed solid-state ionic conductor.

According to an embodiment, the mixed solid-state ionic conductor may have an ionic conductivity of about $8.0 \times 10^{-4}$ Siemens per centimeter ($S \, cm^{-1}$) to about $3.0 \times 10^{-3} \, S \, cm^{-1}$ at 25 °C.

According to another aspect of the disclosure, a solid-state electrolyte includes the mixed solid-state ionic conductors described above.

According to another aspect of the disclosure, a cathode includes the mixed solid-state ionic conductors described above.

According to another aspect of the disclosure, an electrochemical device includes:

a cathode layer;
an anode layer; and
a solid-state electrolyte layer between the cathode layer and the anode layer,

wherein the solid-state electrolyte as described above is in at least one of the cathode layer, the anode layer, and the solid-state electrolyte layer.

According to an embodiment, the cathode layer may include the solid-state electrolyte, and the solid-state electrolyte layer includes a first solid-state electrolyte including the solid-state electrolyte described above, and a second solid-state electrolyte comprising a sulfide-containing solid-state electrolyte, an oxide-containing solid-state electrolyte, a polymer solid-state electrolyte, or a combination thereof.

The electrochemical device may be an electrochemical cell, a storage battery, a supercapacitor, a fuel cell, a sensor, or a color changing device.

According to another aspect of the disclosure, a method of manufacturing a mixed solid-state ionic conductor includes: providing a precursor and a salt which are for forming a solid-state ionic conductor; mechanically milling the precursor and salt to provide a precursor mixture; and molding the precursor mixture to prepare the mixed solid-state ionic conductor.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1A is a schematic diagram of an embodiment showing the crystal structure of a mixed solid-state ionic conductor;
FIG. 1B is a schematic diagram of an embodiment showing the crystal structure of a mixed solid-state ionic conductor;
FIG. 2 is a schematic diagram of an embodiment showing a unit cell in the crystal structure of a mixed solid-state ionic conductor;
FIGS. 3 to 5 are each a cross-sectional view of an embodiment of an all-solid-state secondary battery;
FIG. 6 is a graph of intensity (arbitrary units, a.u.) vs. diffraction angle ($°2\theta$) and shows the results of X-ray diffraction (XRD) analysis using CuK$\alpha$ radiation for a mixed solid-state ionic conductor prepared in Example 1 and $Zr_3(PO_4)_4$;
FIG. 7 is a graph of imaginary impedance (Z", ohms square centimeter, $\Omega \cdot cm^2$) vs. real impedance (Z', $\Omega \cdot cm^2$) that shows the impedance measurement results of a lithium symmetrical cell with a lithium/solid-state electrolyte/lithium structure manufactured using the (mixed) solid-state ionic conductor pellets prepared in Example 1 and Comparative Example 1 as a solid-state electrolyte;
FIG. 8 is a graph of conductivity (Siemens per centimeter, $S \cdot cm^{-1}$) vs. 1000/Temperature (T) (inverse Kelvin, $K^{-1}$) and shows activation energy ($E_a$) values obtained from electrochemical impedance spectroscopy (EIS) analysis for platinum (Pt) electrode structures formed on surfaces of (mixed) solid-state ionic conductor pellets prepared according to Example 1 and Comparative Example 1; and
FIGS. 9A and 9B are each a graph of voltage (Volts, V) vs. capacity (milliampere-hours per square centimeter, $mAh/cm^2$) and show initial charge and discharge test results for all-solid-state secondary batteries manufactured in Example 6 and Comparative Example 17, respectively.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept described hereinafter may be modified in various ways, and may have many examples, and thus, certain examples are illustrated in the drawings, and are described in detail in the specification. The present inventive concept, however, should not be construed as limited to the example embodiments set forth herein, and rather, should be understood as covering all modifications, equivalents, or alternatives falling within the scope of the present inventive concept.

The terms used herein is for the purpose of describing particular embodiments only, and is not intended to be limiting the present inventive concept. An expression used in the singular encompasses the expression of the plural, unless it has a clearly different meaning in the context.

The terminology used herein is for the purpose of describing particular embodiments only and is not intended to be limiting. As used herein, "a", "an," "the," and "at least one" do not denote a limitation of quantity, and are intended to include both the singular and plural, unless the context clearly indicates otherwise. For example, "an element" has the same meaning as "at least one element," unless the context clearly indicates otherwise. Thus, reference to "an" element in a claim followed by reference to "the" element is inclusive of one element and a plurality of the elements. "At least one" is not to be construed as limiting "a" or "an." "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

In this specification, the expressions "at least one type", "one or more types", or "one or more" in front of the components may supplement the entire list of components, and may not supplement the individual components of the description. For example, "at least one of A, B, and C," and similar phrases (e.g., "at least one selected from the group consisting of A, B, and C" or "one or more selected from A, B, and C") is interpreted as A alone, B alone, C alone, or a combination of at least two or more of A, B, and C, such as ABC, AB, BC, and AC.

The term "combination" used herein includes mixtures, alloys, reaction products, etc., unless specifically stated otherwise. The term "include" used herein refers to further inclusion of other components rather than excluding other components, unless specifically stated otherwise.

The terms "first" and "second" do not indicate order, quantity, or importance, but are used to distinguish one element from another element. It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein. Unless indicated otherwise herein or clearly contradicted by context, it should be construed to include both the singular and the plural. "Or" refers to "and/or" unless indicated otherwise.

In this specification, components described with the expressions "on", "above", etc. with reference to other components may be located in direct contact with other components, or there may be components interposed in between.

Throughout this specification, "an embodiment," "embodiment," etc. refer to the case in which a particular element described in connection with an embodiment is included in at least an embodiment described herein and may or may not exist in other embodiments. Additionally, it should be understood that the elements described may be combined in any suitable way in various embodiments.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

Unless stated otherwise, all percentages, parts, ratios, etc. are based on weight. Additionally, when an amount, concentration, or other value or parameter is given as one of a range, a preferred range, or preferred upper and lower limit values, it should be understood that these cases may include all ranges formed from any upper range limit and any lower range limit or any pair of preferred values, regardless of whether a range is separately disclosed.

When a range of numerical values is stated herein, unless stated otherwise, the range is intended to include the endpoints and all integers and fractions within the range. The scope of the disclosure is intended to be not limited to the specific values recited when defining the scope.

Unless specified otherwise, the unit "parts by weight" refers to the weight ratio between respective component, and the unit "part by mass" refers to the value obtained by converting the weight ratio of respective components into solid-state content.

The term "about," "approximately," or "substantially" used herein includes the stated value and refers to within the range of acceptable deviations from that particular value as determined by a person skilled in the art, taking into account the errors associated with the measurement and the measurement of a particular quantity. (i.e. limitations of the measurement system). For example, "about," "approximately," or "substantially" may refer to within one or more standard deviations, or within ±30%, 20%, 10%, or 5% of the specified value. All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.).

Unless defined otherwise, all terms (including technical terms and scientific terms) used in this specification have the same meaning as commonly understood by a person skilled in the art to which this disclosure pertains. It would also be understood that terms, such as terms that are commonly used and defined in dictionaries, should be construed as having meanings consistent with their meanings in the context of the related art and the disclosure, and should not be construed as idealized. Also, it should not be interpreted in an overly formal sense.

Example embodiments are described herein with reference to cross-sectional views, which are schematic diagrams of idealized embodiments. Accordingly, the shape of embodiments may vary, for example as a result of preparing techniques and/or tolerances. Accordingly, embodiments described herein should not be construed as being limited to the specific shape of the region described herein, but should include deviations in shape that occur, for example, during manufacturing. For example, areas illustrated or described as being flat may generally have rough and/or non-linear features. Additionally, the illustrated acute angles may be round. Accordingly, the regions illustrated in the drawings are schematic in nature and the shapes thereof are not intended to illustrate the exact shape of the regions or to limit the scope of the claims.

In general, electrochemical devices that do not use a liquid electrolyte, such as all-solid-state secondary batteries, have minimal safety problems due to flammability and evaporation, and minimal problems of decomposition by reaction with lithium metal. However, a solid-state electrolyte that makes up an all-solid-state secondary battery cannot achieve as high ionic conductivity as a liquid electrolyte. Accordingly, the all-solid-state secondary battery is inferior in terms of charge and discharge characteristics compared to lithium-ion batteries.

Recently, halide-based solid-state ionic conductors have been attracting attention as solid-state ionic conductors used as solid-state electrolytes. Halide-based solid-state electrolytes have mechanical flexibility, non-flammability, and are able to be molded in various ways through simple pressurization. $Li_3InCl_6$ or $Li_3YCl_6$ are known examples of halide-based solid-state electrolytes. However, even if such a halide-based solid-state electrolyte is used, a satisfactory level of ionic conductivity and battery stability cannot be achieved, and thus, the desired level of charge and discharge characteristics may not be obtained.

In order to solve the issues, the inventors of the present application propose a solid-state ionic conductor of a novel composition, a solid-state electrolyte, a cathode, and an electrochemical device, including the same, and a method of manufacturing the solid-state ionic conductor as described above.

Hereinafter, a solid-state ionic conductor, a solid-state electrolyte, a cathode, and an electrochemical device, including the same, and a method of manufacturing the solid-state ionic conductor will be described in more detail through embodiments.

Solid-state ionic conductor

According to an embodiment, the mixed solid-state ionic conductor includes a compound represented by Formula 1 and a salt represented by Formula 2:

$$\text{Formula 1} \qquad M_aM'_bX_cY'_dZ_e$$

wherein
M may be an alkali metal having an oxidation number of +1,

M' may be one or more of a metal cation having an oxidation number of +2, +3, +4, +5, or +6,
X may be one or more of a halogen anion having an oxidation number of -1,
Y' may be an anion having an oxidation number of -1,
Z may be an anion having an oxidation number of -3,
$0.5 \leq a \leq 7$, $0.5 \leq b \leq 2$, $0 < c \leq 6$, $0 \leq d \leq 6$, $0 \leq e \leq 6$, and

$0 < c + d + e \leq 6$, and

$$\text{Formula 2} \qquad M''_f(PO_4)_g$$

wherein M'' may be the same metal cation as M' in Formula 1 or a different metal cation having an oxidation number of +2, +3, +4, +5, or +6, and having an ionic radius that is within $\pm$ 10% of an ionic radius of M', and

$0 < f \leq 3$, and $0 < g \leq 10$.

In regard to the compound of Formula 1, according to an embodiment, M may be one or more of an alkali metal of lithium (Li), sodium (Na), potassium (K), rubidium (Rb), cesium (Cs), or francium (Fr).

According to an embodiment, M' may be one or more of a metal cation having an oxidation number of +2, +3, +4, +5, or +6 excluding alkali metal cations. For example, M' may be one or more of a metal cation having an oxidation number of +3, +4, or +5.

According to an embodiment, the ionic radius of the metal cation of M' may be 70 picometers to 100 picometers. The ionic radius of the metal cation of M' uses Crystal ionic radii of Shannon throughout the specification.

According to an embodiment, M' may be a cation of one or more of Ti, Zr, Hf, V, Nb, Ta, Al, Ga, In, La, Ce, Pr, Nd, Pm, Sm, Eu, Gd, Tb, Dy, Ho, Er, Tm, Yb, Y, or Lu.

According to an embodiment, X may be one or more of a halogen anion of fluorine (F), chlorine (CI), bromine (Br), or iodine (I). For example, X may be one or more of halogen anion of chlorine (CI), bromine (Br), or iodine (I).

According to an embodiment, Y' may be an anion having an oxidation number of -1. Y' is different from X. For example, Y' may be one or more of anion of $SO_3^-$, $CH_3COO^-$, $CN^-$, $NO_3^-$, $NO_2^-$, $H_2PO_4^-$, $PF_6^-$, $OH^-$, $BF_4^-$, $N(CF_3SO_2)_2^-$, $CF_3CO_2^-$, $CF_3SO_3^-$, $C(CF_3SO_2)_3^-$, $HCO_3^-$, $ClO_4^-$, $HSO_4^-$, or $SCN^-$.

According to an embodiment, Z may be one or more of an anion of $(BO_4)^{3-}$, $(BO_3)^{3-}$, $(PO_4)^{3-}$, $[Fe(CN)_6]^{3-}$, or $[Ag(S_2O_3)_2]^{3-}$.

According to an embodiment, $0.5 \leq a \leq 7$, or $0.5 \leq a \leq 6$, or $1 \leq a \leq 5$, or $1 \leq a \leq 4$, or $1 \leq a \leq 3$.

According to an embodiment, $0.5 \leq b \leq 2$, $0.75 \leq b \leq 2$, or $1 \leq b \leq 2$.

According to an embodiment, $0 < c \leq 6$, or $1 < c \leq 6$, or $3 < c \leq 6$.

According to an embodiment, $0 \leq d \leq 6$, $0.5 \leq d \leq 6$, or $1 \leq d \leq 6$.

According to an embodiment, $0 \leq e \leq 6$, $0.5 \leq e \leq 6$, or $1 \leq e \leq 6$.

According to an embodiment, $0 < c + d + e \leq 6$, $0.5 < c + d + e \leq 6$, or $1 < c + d + e \leq 6$.

The compound of Formula 1 is a halide-based compound and includes an X (halogen anion) with a large ionic radius, in which one or three X (halogen anions) may be substituted with Y' (having an oxidation number of -1) anion and/or Z (having an oxidation number of -3) anion. The ionic conductivity of a mixed solid-state ionic conductor with substituted anions may be maintained at the same or greater level as or than a mixed solid-state ionic conductor with no anions substituted.

In an aspect, the salt of Formula 2 is located in a space around the octahedral structure, and is adjacent to the octahedral structure.

According to an embodiment, M" may be the same metal cation as M' in Formula 1 or a different metal cation having an ionic radius that is within ±10% of an ionic radius of M'. That is, M" may be one or more of a metal cation having an oxidation number of +2, +3, +4, +5, or +6 excluding alkali metal cations. For example, when the ionic radius of the metal cation of M' is 80 picometers, M" may be a metal cation having an ionic radius of 72 picometers to 88 picometers, 74 picometers to 86 picometers, or 76 picometers to 84 picometers. The closer the metal cation radii of M' and M" are, the lower the activation energy of the mixed solid-state ionic conductor may be, improving ionic conductivity.

A mixed solid-state ionic conductor according to an embodiment may include one or more of $Li_2ZrCl_6$ compound and $Zr_3(PO_4)_4$ salt, $Li_2ZrCl_6$ compound and $Zr_3(PO_4)_4$ salt, $LiTaCl_6$ compound and $Ta_3(PO_4)_3$ salt, $Li_3YCl_6$ compound and $YPO_4$ salt, $Li_3InCl_6$ compound and $In(PO_4)$ salt, $Li_3YBr_6$ compound and $YPO_4$ salt, $Li_3ErCl_6$ compound and $Er(PO_4)$ salt, $Li_3ErI_6$ compound and $Er(PO_4)$ salt, $Li_3HoCl_6$ compound and $H_O(PO_4)$ salt, $Li_3TiCl_6$ compound and $Ti(PO_4)$ salt, $Li_2TiCl_6$ compound and $Ti_3(PO_4)_4$ salt, $Li_3YbCl_6$ compound and $Yb(PO_4)$ salt, $Li_3LuCl_6$ compound and $Lu(PO_4)$ salt, $Li_3TmCl_6$ compound and $Tm(PO_4)$ salt, $LiAlCl_4$ compound and $Al(PO_4)$ salt, $LiGaCl_4$ compound and $Ga(PO_4)$ salt, $LiVCl_3$ compound and $V_3(PO_4)_2$ salt, $Li_2HfCl_6$ compound and $Hf_3(PO_4)_4$ salt, $Li_3SmCl_6$ compound and $SmPO_4$ salt, $LiNbCl_6$ compound and $Nb_3(PO_4)_3$ salt, or $Li_3LaCl_6$ compound and $LaPO_4$ salt.

The mixed solid-state ionic conductor according to an embodiment may have greater ionic conductivity than the halide-based solid-state ionic conductor alone and may have excellent charging and discharging characteristics.

According to an embodiment, an impurity may not be included. In an aspect the impurity may be a first composition.

According to an embodiment, the impurity may be further included in an amount of greater than about 0 wt% and less than about 5 wt%, greater than about 0.1 wt% and less than about 4 wt%, greater than about 0.5 wt% and less than about 3 wt%, based on 100 wt% of the total amount of the mixed solid-state ionic conductor. When the amount of the impurity is within this range, the chemical reactivity between the M' metal cation of the compound of Formula 1 and the metal cation included in the impurity is similar, so that the decrease in ionic conductivity may not be affected.

For example, the impurities may include a first composition comprising one or more of a compound represented by Formula 3, a salt represented by Formula 4, or a combination thereof:

Formula 3      $(M1)_p(X1)_q(Y'1)_r(Z1)_s$

wherein

M1 may be one or more of a metal cation having an oxidation number of +2, +3, +4, +5, or +6,
X1 may be one or more of a halogen anion,
Y'1 may be an anion with an oxidation number of -1,
Z1 may be an anion with an oxidation number of -3,
$0.5 \leq p \leq 2$, $0 < q \leq 6$, $0 \leq r \leq 6$, $0 \leq s \leq 6$, and $0 < q + r + s \leq 6$.

Formula 4      $(M2)_t(PO_4)_v$

wherein

M2 may be an alkali metal having an oxidation number of +1,

$0.5 \leq t \leq 7$, and $0 < v \leq 7/3$.

For example, the impurity may include $ZrCl_4$, $ZrCl_3$, $TaCl_5$, $YCl_3$, $ErCl_3$, or $InCl_3$.

According to an embodiment, the compound of Formula 1 and the salt of Formula 2 may each be a nanoparticle having a particle size of about 1 nanometer (nm) to about 100 nm. For example, the compound of Formula 1 and the salt of Formula 2 may each be a nanoparticle having a particle size of about 1 nm to about 90 nm, about 1 nm to about 80 nm, about 1 nm to about 70 nm, about 1 nm to about 60 nm, or about 1 nm to about 50 nm, about 5 nm to about 100 nm, about 10 nm to about 80 nm, or about 15 nm to about 60 nm. In an aspect, the particle size may refer to a diameter of a major axis of a particle. The particle size of multiple particles may be an average of the particle size (average size). The average size may be calculated by analyzing the sizes of the particles by scanning electron microscopy. An average may be mean or median.

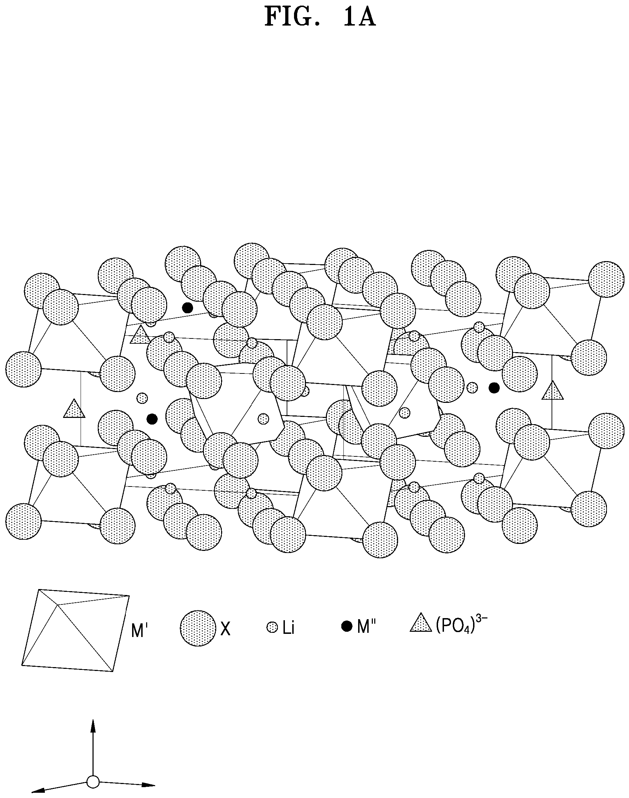

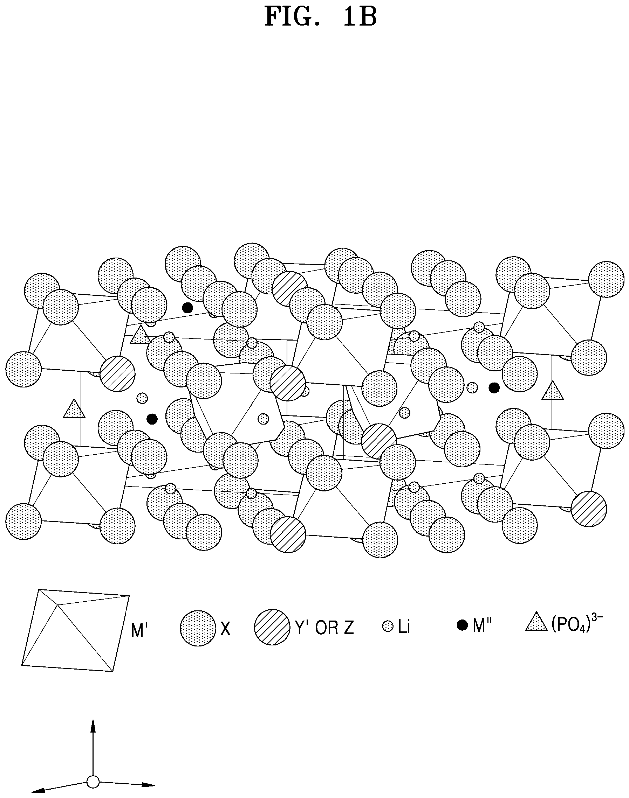

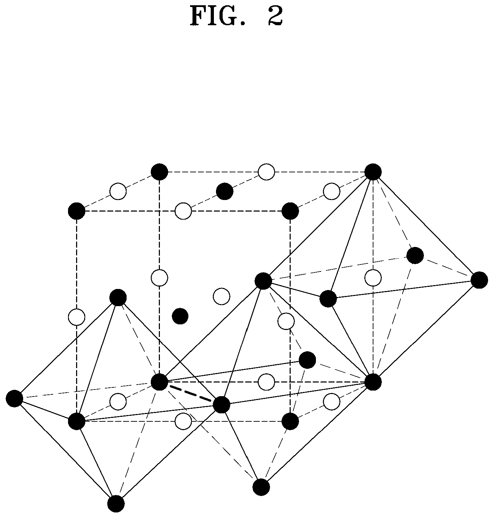

FIG. 1A is a schematic diagram showing the crystal structure of a mixed solid-state ionic conductor according to an embodiment; FIG. 1B is a schematic diagram showing the crystal structure of a mixed solid-state ionic conductor according to an embodiment. FIG. 2 is a schematic diagram showing a unit cell in the crystal structure of a mixed solid-state ionic conductor according to an embodiment.

As shown in FIGS. 1A, 1B, and 2, the mixed solid-state ionic conductor according to an embodiment has a distorted rock-salt type crystal structure. The distorted rock-salt type crystal structure herein may refer to a crystal structure that is similar to the rock salt structure but has undergone distortions or deviations from the ideal arrangement of a rock-salt crystal structure. The rock-salt crystal structure is a cubic close-packed arrangement of ions, where each cation is surrounded by anions, and vice versa, in a regular and repeating pattern. In a distorted rock salt structure, external factors such as temperature, pressure, or the presence of impurities can cause the crystal lattice to deviate from this ideal cubic arrangement.

The compound of Formula 1 may have a $M'X_6$ octahedral structure in which an M' metal cation with an oxidation number of +2, +3, +4, +5, or +6 is positioned at the center in the crystal structure, and six X anions are located (coordinated) at corners thereof (X=one or more of the halogen elements), or a $M'X_cY'_dZ_e$ octahedral structure in which some of the 6 anions positioned (coordinated) at corners are substituted with one or more of anion of Y' and Z (X= one or more of halogen elements, Y' = an anion having the oxidation number of -1, Z = an anion having the oxidation number of -3, and c+d+e = 6). The adjacent octahedrons share an edge. In an aspect, the compound of Formula 1 has an octahedral structure in which M' is a central metal cation coordinated by six halogen anions, wherein each halogen anion is optionally substituted with one or more of Y' or Z.

In the salt of Formula 2, the M" metal cation and $(PO_4)^{3-}$ anion are located along with the M (alkali metal), e.g., Li metal cation, in the space around the octahedron. The Li metal cation may have a LiX ionic bond depending on the distance between the same from the X halogen anion. In some embodiments, in the case where an excess of M" metal cations is mixed with an excess of salts of $(PO_4)^{3-}$ anions, M'X and/or $Li_3(PO_4)$ impurities may also be produced.

The mixed solid-state ionic conductor may have a layered crystal structure. The mixed solid-state ionic conductor has a lithium ion movement channel connected three-dimensionally in a three-dimensional area in the x-axis, y-axis, and z-axis directions, and the salt of Formula 2 is a nano-sized particle and acts as a filler in the space around the compound of Formula 1. Therefore, it is considered that the ionic conductivity of the mixed solid-state ionic conductor is improved and the charge and discharge characteristics are improved.

According to an embodiment, the amount of the salt of Formula 2 may be about 5 wt% to about 30 wt%, about 8 wt% to about 25 wt%, or about 10 wt% to about 20 wt%, based on 100 wt% of the total weight of the mixed solid-state ionic conductor. When the amount of the salt of Formula 2 is within this range, ionic conductivity and charging and discharging characteristics may be further improved.

According to an embodiment, in the X-ray diffraction analysis using Cu K$\alpha$ radiation, a major peak appears at a location where the diffraction angle $2\theta$ is about $15°2\theta$ to about $25°2\theta$, about $17°2\theta$ to about $23°2\theta$, or about $19°2\theta$ to about $21°2\theta$, and a minor peak appears at a location where the diffraction angle $2\theta$ is about $25°2\theta$ to about $35°2\theta$, about $27°2\theta$ to about $33°2\theta$, or about $29°2\theta$ to about $31°2\theta$. In this regard, the major peak refers to the peak with the maximum intensity, and the minor peak refers to the peak with a smaller intensity compared to the major peak.

According to an embodiment, the mixed solid-state ionic conductor may have the ionic conductivity of about $8.0 \times 10^{-4}$ Siemens per centimeter (S cm$^{-1}$) to about $3.0 \times 10^{-3}$ S cm$^{-1}$, about $9.0 \times 10^{-4}$ S cm$^{-1}$ to about $3.0 \times 10^{-3}$ S cm$^{-1}$, or about $1.0 \times 10^{-3}$ S cm$^{-1}$ to about $3.0 \times 10^{-3}$ S cm$^{-1}$, at 25 °C.

According to an embodiment, the mixed solid-state ionic conductor may have an activation energy of about 0.1 electron Volt (eV) to about 0.35 eV, about 0.15 eV to about 0.3 eV, or about 0.2 eV to about 0.25 eV, at 25 °C.

Solid-state electrolyte, cathode, and electrochemical device

According to another embodiment, a solid-state electrolyte may include the mixed solid-state ionic conductor as described above. The solid-state electrolyte including the mixed solid-state ionic conductor may provide electrochemical devices with improved ionic conductivity and improved charging and discharging characteristics.

The solid-state electrolyte may be in a powder or a molded form. The molded product of the solid-state electrolyte may have the form of pellets, sheets, thin films, etc. For example, the solid-state electrolyte may be in the form of pellets. However, the molded product of the solid-state electrolyte is not limited thereto and may be manufactured in various forms depending on the purpose.

According to another embodiment, a cathode may include the mixed solid-state ionic conductor as described above.

According to another embodiment, an electrochemical device may include the solid-state electrolyte as described above in at least one of a cathode layer, an anode layer, and the solid-state electrolyte layer. In an aspect, an electrochemical device comprises: a cathode layer; an anode layer; and a solid-state electrolyte layer between the cathode layer and the anode layer, wherein the solid-state electrolyte is in at least one of the cathode layer, the anode layer, or the solid-state electrolyte layer.

The electrochemical device according to an embodiment may be an electrochemical cell, a storage battery, a supercapacitor, a fuel cell, a sensor, or a color changing device. For example, the electrochemical device may be an electrochemical cell. For example, the electrochemical cell may be an all-solid-state secondary battery.

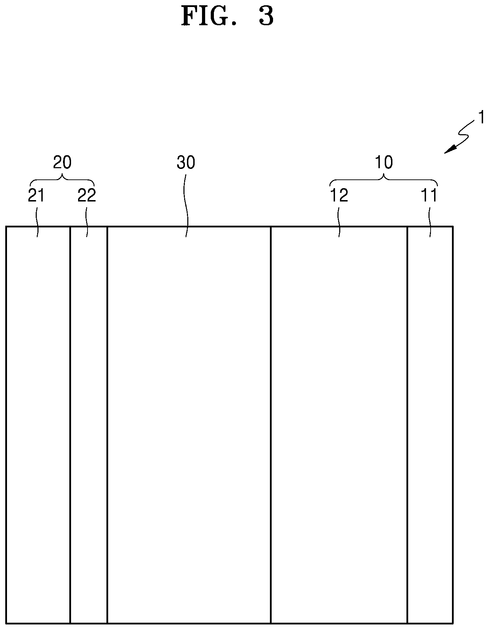

FIGS. 3 to 5 are cross-sectional views of an all-solid-state secondary battery 1 or 1a according to an embodiment.

In FIGS. 3 to 5, the all-solid-state secondary battery 1 or 1a includes a cathode layer 10 including a cathode current collector 11 and a cathode active material layer 12, an anode layer 20, and a solid-state electrolyte layer 30 disposed between the cathode layer 10 and the anode layer 20. The anode layer 20 includes an anode current collector 21 and an anode active material layer 22 disposed on the anode current collector 21, wherein the anode active material layer 22 may include lithium metal or an anode active material that forms an alloy with lithium. One or more of the cathode layer 10, the anode layer 20, or the solid-state electrolyte layer 30, of the all-solid-state secondary battery 1 or 1a may include the solid-state ionic conductor as described above.

The cathode layer 10 according to an embodiment may include the mixed solid-state ionic conductor as described above and the solid-state electrolyte layer 30 may include a solid-state electrolyte of a sulfide-based solid-state electrolyte, an oxide-based solid-state electrolyte, a polymer solid-state electrolyte, or a combination thereof.

The cathode layer 10 according to an embodiment includes the mixed solid-state ionic conductor as described above, and the solid-state electrolyte layer 30 may further include, in addition to the mixed solid-state ionic conductor as described above, a different solid-state electrolyte of a sulfide-based solid-state electrolyte, an oxide-based solid-state electrolyte, a polymer solid-state electrolyte, or a combination thereof. In an aspect, the cathode layer comprises the solid-state electrolyte, and the solid-state electrolyte layer comprises a first solid-state electrolyte comprising the solid-state electrolyte, and a second solid-state electrolyte comprising a sulfide-containing solid-state electrolyte, an oxide-containing solid-state electrolyte, a polymer solid-state electrolyte, or a combination thereof.

A metal substrate may be used as the cathode current collector 11. Examples of metal substrates include a plate or foil which includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), an alloy thereof, or a combination thereof. The cathode current collector 11 may be omitted.

The cathode active material layer 12 is a layer derived from a composition including a cathode active material andr a solid-state electrolyte. The solid-state electrolyte included in the cathode layer 10 may be the same as or different from the solid-state electrolyte included in the solid-state electrolyte layer 30. For example, the cathode active material layer 12 may include the solid-state electrolyte including the mixed solid-state ionic conductor as described above.

The cathode active material may be used without limitation as long as it can be suitably used in the all-solid-state secondary batteries 1 and 1a. For example, as the cathode active material, one or more of composite oxides of lithium and a metal of cobalt, manganese, nickel, or a combination thereof may be used. Examples thereof include $Li_aA_{1-b}B'_bD'_2$ (where $0.90 \leq a \leq 1.8$ and $0 \leq b \leq 0.5$); $Li_aE_{1-b}B'_bO_{2-c}D'_c$ (where $0.90 \leq a \leq 1.8$, $0 \leq b \leq 0.5$, and $0 \leq c \leq 0.05$); $LiE_{2-b}B'_bO_{4-c}D'_c$ (where $0 \leq b \leq 0.5$ and $0 \leq c \leq 0.05$); $Li_aNi_{1-b-c}Co_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$.); $Li_aNi_bCo_cMn_dG_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$.); $Li_aNiG_bO_2$ (where $0.90 \leq a \leq 1.8$ and $0.001 \leq b \leq 0.1$.); $Li_aCoG_bO_2$ (where $0.90 \leq a \leq 1.8$ and $0.001 \leq b \leq 0.1$.); $Li_aMnG_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$.); $QO_2$; $QS_2$; $LiQS_2$; $V_2O_5$; $LiV_2O_2$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); $LiFePO_4$, or a combination thereof. Regarding these formulae, A may be Ni, Co, Mn, or a combination thereof; B' may be Al, Ni, Co, Mn, Cr, Fe, Mg, Sr, V, a rare earth element, or a combination thereof; D' may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. For example, the cathode active material includes one or more of lithium cobalt oxide, lithium nickel oxide, lithium nickel cobalt oxide, lithium nickel cobalt aluminum oxide, lithium nickel cobalt manganese oxide, lithium manganese oxide, lithium iron phosphate, nickel sulfide, copper sulfide, lithium sulfide, iron oxide, or vanadium oxide. For example, the cathode active materials may be $LiCoO_2$, $LiMn_xO_{2x}$(x=1, 2), $LiNi_{1-x}Mn_xO_2$(0<x<1), $LiNi_{1-x-y}Co_xMn_yO_2$ (0≤x≤0.5, 0≤y≤0.5), $LiFePO_4$, $TiS_2$, $FeS_2$, $TiS_3$, $FeS_3$, etc.

The cathode active material layer 12 may further include an ionic liquid electrolyte. Ionic liquid electrolytes may be non-volatile. The ionic liquid refers to a salt that is in a liquid state at room temperature or a molten salt at room temperature, which has a melting point below room temperature and consists only of ions. The ionic liquid may be one of compounds including: a) one or more cations of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or mixtures thereof; and b) one or more of anions of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br, I-, $SO_4^-$, $CF_3SO_3^-$, $(FSO_2)_2N^-$, $(C_2F_5SO_2)_2N^-$, $(C_2F_5SO_2)(CF_3SO_2)N^-$, or $(CF_3SO_2)_2N^-$; For example, the ionic liquid may include one or more of N-methyl-N-propylpyrrolidinium bis(trifluoromethanesulfonyl) imide N-butyl-N-methylpyrrolidium bis(3-trifluoromethylsulfonyl)imide, 1-butyl-3-methylimidazolium bis(trifluoromethylsulfonyl)im ide, or 1-ethyl-3-methylim idazolium bis(trifluoromethylsulfonyl)imide . A polymer ionic liquid may include a repeating unit including: a) one or more cations of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or mixtures thereof; and b) one or more anions of $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, Cl-, Br, I-, $SO_4^-$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH-$, $(SF_5)_3C^-$, or $(O(CF_3)_2C_2(CF_3)_2O)_2PO^-$.

The ionic liquid electrolyte may fill the pores of the surface of the cathode active material layer 12 in contact with the solid-state electrolyte layer 30 . The amount of the ionic liquid electrolyte may be about 0.1 parts by weight to about 20 parts by weight, about 0.1 parts by weight to about 15 parts by weight, about 0.1 parts by weight to about 10 parts by weight, or about 0.1 parts by weight to about 5 parts by weight, based on 100 parts by weight of the cathode active material layer 12 not including the ionic liquid electrolyte. By improving ionic conductivity due to the inclusion of an ionic liquid electrolyte, the charge and discharge characteristics of the all-solid-state secondary batteries 1 and 1a may be improved.

The cathode active material layer 12 may further include a conductive material, or a binder. For example, the conductive material may include carbon black, carbon fiber, graphite, or a combination thereof. For example, the carbon black may be acetylene black, Ketjen black, Super P carbon, channel black, furnace black, lamp black, thermal black, or a combination thereof. Graphite may be natural graphite or artificial graphite. Combinations including at least two of the foregoing materials may be used. The cathode active material layer 12 may additionally include a conductive material of a different composition in addition to the conductive material as described above. Additional conductive materials include electrically conductive fibers such as metal fibers; fluorocarbon powder; metal powders such as aluminum powder or nickel powder; conductive whiskers such as zinc oxide or potassium titanate; polyethylene derivatives; or a combination thereof. The amount of the conductive material may be in the range of about 1 part by weight to about 10 parts by weight, for example, about 2 parts by weight to about 7 parts by weight, based on 100 parts by weight of the cathode active material. When the amount of the conductive material is within this range, for example, about 1 part by weight to about 10 parts by weight, the electrical conductivity of the cathode layer 10 may be adequate.

The binder may improve the adhesion between the components of the cathode layer 10 and the adhesion to the cathode current collector 11. Examples of binders include polyacrylic acid (PAA), polyvinylidene fluoride, polyvinyl alcohol, carboxymethyl cellulose (CMC), starch, and hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene-butadiene-rubber, fluorinated rubber, copolymers thereof, or combinations thereof. The amount of the binder may be in the range of about 1 part by weight to about 10 parts by weight, for example, in the range of about 2 parts by weight to about 7 parts by weight, based on 100 parts by weight of the cathode active material. When the amount of the binder is within this range, the adhesion of the cathode active material layer 12 to the cathode current collector 11 is further improved, and a decrease in the energy density of the cathode active material layer 12 may be suppressed.

Solvents such as N-methylpyrrolidone, acetone, and water may be used. The amounts of the cathode active material, the conductive material, the binder, and the solvent are at levels suitably used in all-solid-state secondary batteries.

The cathode active material layer 12 may be prepared by appropriately mixing additives such as fillers, dispersants, and ion conductivity auxiliaries, in addition to the cathode active material, the solid-state electrolyte, the conductive material, and the binder, which are as described above. If necessary, a plasticizer may be added to the composition to form pores inside the cathode active material layer 12. As fillers, dispersants, ion conductive auxiliaries, plasticizers, etc., known materials generally used in electrodes of all-solid-state secondary batteries 1 and 1a may be used.

The anode layer 20 may include the anode current collector 21 and the anode active material layer 22.

Materials constituting the anode current collector 21 include copper (Cu), stainless steel, titanium (Ti), iron (Fe), cobalt (Co), or nickel (Ni). The anode current collector 21 may include one type of metal, or an alloy or a coating material of two or more of metals. The anode current collector 21 may be formed, for example, in a plate shape or a foil shape.

The anode active material layer 22 may include lithium metal or lithium alloy. Examples of lithium alloys may include lithium and one or more of gold, platinum, palladium, silver, aluminum, bismuth, tin, or zinc. If necessary, the anode active material layer 22 may include a carbon-based (i.e., carbon-containing) anode active material, or an anode active material including a combination of lithium metal or lithium alloy and a carbon-based anode active material.

Carbon-based anode active materials include graphite, carbon black (CB), acetylene black (AB), furnace black (FB), ketjen black (KB), graphene, carbon nanotubes, or carbon nanofiber.

The anode active material layer 22 may be formed by appropriately mixing additives such as conductive materials, binders, fillers, dispersants, and ionic conductivity auxiliaries including the same materials as those described in the cathode layer 10.

If necessary, the anode active material layer 22 may be an anode-free coating layer. For example, the anode-free coating layer may contain a metal such as silicon and carbon, and may have a structure in which a conductive binder is disposed around the metal and carbon. A thickness of the anode-free coating layer may be 1 $\mu$m to 20 $\mu$m.

The solid-state electrolyte layer 30 may include the mixed solid-state ionic conductor as described above.

The solid-state electrolyte layer 30 may further include an oxide-based solid-state electrolyte, a sulfide-based solid-state electrolyte, a polymer solid-state electrolyte, or a combination thereof.

In an aspect, the solid-state electrolyte layer 30 comprises a first solid-state electrolyte comprising the solid-state electrolyte, and a second solid-state electrolyte comprising a sulfide-containing solid-state electrolyte, an oxide-containing solid-state electrolyte, a polymer solid-state electrolyte, or a combination thereof.

In an aspect, the cathode layer comprises the solid-state electrolyte, and the solid-state electrolyte layer 30 comprises a first solid-state electrolyte comprising the solid-state electrolyte, and a second solid-state electrolyte comprising a sulfide-containing solid-state electrolyte, an oxide-containing solid-state electrolyte, a polymer solid-state electrolyte, or a combination thereof.

The solid-state electrolyte layer 30 may be a single layer or a multi-layer of two or more layers. For example, the solid-state electrolyte layer 30 may be a two-layer solid-state electrolyte layer including a first solid-state electrolyte layer which is positioned in contact with the cathode layer 10 and a second solid-state electrolyte layer on the first solid-state electrolyte layer. The first solid-state electrolyte layer may be the mixed solid-state ionic conductor as described above, and the second solid-state electrolyte layer may be an oxide-based solid-state electrolyte, a sulfide-based solid-state electrolyte, a polymer solid-state electrolyte, or a combination thereof. In some embodiments, the first solid-state electrolyte layer may be an oxide-based solid-state electrolyte, a sulfide-based solid-state electrolyte, a polymer solid-state electrolyte, or a combination thereof, and the second solid-state electrolyte layer may be the mixed solid-state ionic conductor as described above.

An example of an oxide-based solid-state electrolyte may include one or more of $Li_{1+x+y}Al_xTi_{2-x}Si_yP_{3-y}O_{12}$ (0<x<2, 0≤y<3), $BaTiOs$, $Pb(Zr,Ti)O_3$(PZT), $Pb_{1-x}La_xZr_{1-y}Ti_yO_3$(PLZT) (0≤x<1, 0≤y<1), $Pb(Mg_{1/3}Nb_{2/3})O_3$-$PbTiO_3$(PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ (0<x<2, 0<y<3), $LixAlyTiz(PO_4)_3$ (0<x<2, 0<y<1, 0<z<3), $Li_{1+x+y}(Al, Ga)_x(Ti, Ge)_{2-x}Si_yP_{3-y}O_{12}$ (0≤x≤1 0≤y≤1), $Li_xLa_yTiO_3$ (0<x<2, 0<y<3), $Li_2O$, $LiOH$, $Li_2CO_3$, $LiAlO_2$, $Li_2O$-$Al_2O_3$-$SiO_2$-$P_2O_5$-$TiO_2$-$GeO_2$, or $Li_{3+x}La_3M_2O_{12}$ (M= Te, Nb, or Zr, where x is an integer from 1 to 10).

Oxide-based solid-state electrolytes may be prepared by a sintering method, a casting method, etc.

For example, the oxide-based solid-state electrolyte may be a garnet-based solid-state electrolyte.

For example, the garnet-based solid-state electrolyte (e.g., electrolyte isostructural with garnet) may include an oxide represented by Formula 5,

Formula 5          $(Li_xM'1_y)(M'2)_{3-\delta}(M'3)_{2-\omega}O_{12-z}X'_z$

wherein in the formula, 6≤x≤8, 0≤y<2, -0.2≤δ≤0.2, -0.2≤ω≤0.2, and 0≤z≤2,

M'1 may be a monovalent cation, a divalent cation, a trivalent cation, or a combination thereof,
M'2 may be a monovalent cation, a divalent cation, a trivalent cation, or a combination thereof,
M'3 may be a monovalent cation, a divalent cation, a trivalent cation, a tetravalent cation, a pentavalent cation, a hexavalent cation, or a combination thereof,
X' may be a monovalent anion, a divalent anion, a trivalent anion or a combination thereof.

In Formula 5, examples of monovalent cations include Na, K, Rb, Cs, H, Fr, etc., and examples of divalent cations include Mg, Ca, Ba, Sr, etc. Examples of trivalent cations are In, Sc, Cr, Au, B, Al, and Ga, and examples of tetravalent cations in Formula 1 are Sn, Ti, Mn, Ir, Ru, Pd, Mo, Hf, Ge, V, and Si. Examples of pentavalent cations are Nb, Ta, Sb, V, and P.

M'1 may be, for example, hydrogen (H), iron (Fe), gallium (Ga), aluminum (Al), boron (B), beryllium (Be), or a combination thereof. M'2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, M'3 may be zirconium (Zr), hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

Regarding Formula 5, the monovalent anion used as X' may be a halogen atom, a pseudohalogen, or a combination thereof, the divalent anion may be $S^{2-}$ or $Se^{2-}$, and the trivalent anion may be, for example, $N^{3-}$.

In Formula 5, $6.6 \leq x \leq 8$, $6.7 \leq x \leq 7.5$, or $6.8 \leq x \leq 7.1$.

For example, the garnet-based solid-state electrolyte may include an oxide represented by Formula 6,

$$\text{Formula 6} \qquad (Li_xM'1_y)(La_{a1}M'2_{a2})_{3-\delta}(Zr_{b1}M'3_{b2})_{2-\omega}O_{12-z}X'_z$$

wherein in the formula, M'1 may be hydrogen (H), iron (Fe), gallium (Ga), aluminum (Al), boron (B), beryllium (Be), or a combination thereof,

M'2 may be barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof,
M'3 may be hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof,
$6 \leq x \leq 8$, $0 \leq y < 2$, $-0.2 \leq \delta \leq 0.2$, $-0.2 \leq \omega \leq 0.2$, $0 \leq z \leq 2$,
$a1 + a2 = 1$, $0 < a1 \leq 1$, $0 \leq a2 < 1$,
$b1 + b2 = 1$, $0 < b1 \leq 1$, $0 \leq b2 < 1$, and
X' may be a monovalent anion, a divalent anion, a trivalent anion, or a combination thereof.

Regarding Formula 6, the monovalent anion used as X' may be a halogen atom, a pseudohalogen, or a combination thereof, the divalent anion may be $S^{2-}$ or $Se^{2-}$, and the trivalent anion may be, for example, $N^{3-}$.

In Formula 6, $6.6 \leq x \leq 8$, $6.7 \leq x \leq 7.5$, or $6.8 \leq x \leq 7.1$.

The term "pseudohalogen" used herein is a molecule comprised of two or more electronegative atoms that are similar to halogens in the free state, and may generate anions that are similar to halide ions. Examples of pseudohalogens are cyanide, cyanate, thiocyanate, azide, or a combination thereof.

Halogen atoms may be, for example, iodine (I), chlorine (Cl), bromine (Br), fluorine (F), or a combination thereof, and pseudohalogens may be, for example, cyanide, cyanate, thiocyanate, azide, or a combination thereof.

The trivalent anion may be, for example, $N^{3-}$.

According to another embodiment, a garnet-based solid-state electrolyte may be an oxide represented by Formula 7,

$$\text{Formula 7} \qquad Li_{3+x}La_3Zr_{2-a}(M'4)_aO_{12}$$

wherein M'4 in Formula 7 may be Al, Ga, In, Si, Ge, Sn, Sb, Bi, Sc, Y, Ti, Hf, V, Nb, Ta, W, or a combination thereof, and x may be a number from 1 to 10, and $0 \leq a < 2$.

Examples of garnet-based solid-state electrolytes are $Li_7La_3Zr_2O_{12}$, and $Li_{6.5}La_3Zr_{1.5}Ta_{0.5}O_{12}$.

The garnet-based solid-state electrolyte may have an ionic conductivity of 1 mSc·cm$^{-1}$ or greater and may be prepared in the form of pellets, tapes, and films. The garnet-based solid-state electrolyte may be prepared to have various thicknesses over a wide temperature range.

The sulfide-based solid-state electrolyte is not particularly limited as long as it includes sulfur (S) or sulfur-based elements (Se, Te) and has ionic conductivity. For example, the sulfide-based solid-state electrolyte may include one or more of $Li_2S-P_2S_5$, $Li_2S-P_2S_5$-LiX (where X is a halogen element), $Li_2S-P_2S_5$-$Li_2O$, $Li_2S-P_2S_5$-$Li_2O$-LiI, $Li_2S-SiS_2$, $Li_2S$-

$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, and Z is one of Ge, Zn, or Ga), $Li_2S$-$GeS_2$, $Li_2S$-$SiS_2$-$Li_3PO_4$, or $Li_2S$-$SiS_2$-$Li_pMO_q$ (p and q are positive numbers, and M may be one of P, Si, Ge, B, Al, Ga, and In). When a sulfide-based solid-state electrolyte material includes $Li_2S$-$P_2S_5$, the mixing molar ratio of $Li_2S$ and $P_2S_5$ may be selected in the range of 50:50 to 90:10, may be selected in the range of 60:40 to 90:10, or may be selected in the range of 75:25 to 90:10. The sulfide-based solid-state electrolyte may be prepared by treating raw starting materials (for example, $Li_2S$, $P_2S_5$, etc.) by a melt quenching method, a mechanical milling method, etc. In some embodiments, calcinations may be performed after the treatment.

The sulfide-based solid-state electrolyte may include a compound represented by Formula 8,

Formula 8 $\quad\quad Li_aM'5_xPS_yM'6_zM'7_w$

wherein in Formula 8, M'5 may be one or more metal elements other than Li of Group 1 to Group 15 of the Periodic Table, and M'6 may be one or more elements of Group 17 of the Periodic Table, and

M'7 may be $SO_n$, $4 \le a \le 8$, $0 < x < 1$, $3 \le y \le 7$, $0 < z \le 5$, $0 \le w < 2$, and $1.5 \le n \le 5$.

In Formula 8, $0 < z \le 5$, $0 < z \le 4$, $0 < z \le 3$, $0 < z \le 2$, $0.2 \le z \le 1.8$, $0.5 \le z \le 1.8$, $1.0 \le z \le 1.8$ or $1.0 \le z \le 1.5$.

Regarding Formula 8, $5 \le a \le 8$, $0 < x \le 0.7$, $4 \le y \le 7$, $0 < z \le 2$, and $0 \le w \le 0.5$, for example, $5 \le a \le 7$, $0 < x \le 0.5$, $4 \le y \le 6$, $0 < z \le 2$, and $0 \le w \le 0.2$, for example, $5.5 \le a \le 7$, $0 < x \le 0.3$, $4.5 \le y \le 6$, $0.2 \le z \le 1.8$, and $0 \le w \le 0.1$, for example, $5.5 \le a \le 6$, $0 < x \le 0.05$, $4.5 \le y \le 5$, $1.0 \le z \le 1.5$, and $0 \le w \le 0.1$.

Regarding the compound represented by Formula 8, for example, M'5 may include Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof. M'5 may be, for example, a monovalent cation or a divalent cation.

Regarding the compound represented by Formula 8, for example, M'6 may include F, Cl, Br, I, or a combination thereof. M'6 may be, for example, a monovalent anion.

Regarding the compound represented by Formula 8, for example, $SO_n$ of M7 may be $S_4O_6$, $S_3O_6$, $S_2O_3$, $S_2O_4$, $S_2O_3$, $S_2O_6$, $S_2O_7$, $S_2O_3$, $SO_4$, SOs, or a combination thereof. $SO_n$ may be, for example, a divalent anion. $SO_n^{2-}$ may be, for example, $S_4O_6^{2-}$, $S_3O_6^{2-}$, $S_2O_3^{2-}$, $S_2O_4^{2-}$, $S_2O_3^{2-}$, $S_2O_3^{2-}$, $S_2O_7^{2-}$, $S_2O_8^{2-}$, $SO_4^{2-}$, $SO_5^{2-}$, or a combination thereof.

For example, the compound represented by Formula 8 may be a compound selected from compounds represented by Formulae 8a to 8b:

Formula 8a $\quad\quad Li_aPS_yM''7_zM'8_w$

wherein in Formula 8a, M''7 may be one or more elements of Group 17 of the Periodic Table, M'8 may be $SO_n$, and $4 \le a \le 8$, $3 \le y \le 7$, $0 < z \le 5$, $0 < w < 2$, and $1.5 \le n \le 5$,

Formula 8b $\quad\quad Li_aM'9_xPS_yM'10_zM'11_w$

wherein in Formula 8b, M'9 may be one or more metal elements other than Li of Group 1 to Group 15 of the Periodic Table, and M'10 may be one or more elements of Group 17 of the Periodic Table, and M'11 may be $SO_n$, $4 \le a \le 8$, $0 < x < 1$, $3 \le y \le 7$, $0 < z \le 5$, $0 < w < 2$, and $1.5 \le n \le 5$.

Regarding Formulae 8a and 8b, $0 < z \le 5$, $0 < z \le 4$, $0 < z \le 3$, $0 < z \le 2$, $0.2 \le z \le 1.8$, $0.5 \le z \le 1.8$, $1.0 \le z \le 1.8$ or $1.0 \le z \le 1.5$. Regarding Formulae 8a and 8b, for example, $5 \le a \le 8$, $4 \le y \le 7$, $0 < z \le 2$, and $0 \le w \le 0.5$; $5.5 \le a \le 7$, $4.5 \le y \le 6$, $0.2 \le z \le 1.8$, and $0 \le w \le 0.1$; $0.5 \le z \le 1.8$; or $1.0 \le z \le 1.8$.

For example, the compound represented by Formula 8 may be a compound represented by Formula 9,

Formula 9 $\quad\quad Li_{7-m \times v-z}M'12_vPS_{6-z}M'13_{z1}M'14_{z2}$

wherein M'12 may be Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m may be the oxidation number of M'12, M'13 and M'14 may each independently be F, Cl, Br, or I, and $0 < v \le 0.7$, $0 < z1 < 2$, $0 \le z2 < 1$, $0 < z < 2$, $z = z1 + z2$, and $1 \le m \le 2$.

For example, $0 < v \le 0.7$, $0 < z1 < 2$, $0 \le z2 \le 0.5$, $0 < z < 2$, and $z = z1 + z2$. For example, $0 < v \le 0.5$, $0 < z1 < 2$, $0 \le z2 \le 0.5$, $0 < z < 2$, and $z = z1 + z2$. For example, $0 < v \le 0.3$, $0 < z1 \le 1.5$, $0 \le z2 \le 0.5$, $0.2 \le z \le 1.8$, and $z = z1 + z2$. For example, $0 < v \le 0.1$, $0 < z1 \le 1.5$, $0 \le z2 \le 0.5$, $0.5 \le z \le 1.8$, and $z = z1 + z2$. For example, $0 < v \le 0.05$, $0 < z1 \le 1.5$, $0 \le z2 \le 0.2$, $1.0 \le z \le 1.8$, and $z = z1 + z2$. M'12 may be, for example, one metal element or two metal elements.

For example, the compound represented by Formula 9 may contain one type of halogen element or two types of halogen elements.

For example, the compound represented by Formula 9 may be a solid-state ionic conductor compound represented by Formulae 9a to 9f:

Formula 9a $\qquad$ $Li_{7-z}PS_{6-z}M'15_{z1}M'16_{z2}$

Formula 9b $\qquad$ $Li_{7-v-z}Na_vPS_{6-z}M'15_{z1}M'16_{z2}$

Formula 9c $\qquad$ $Li_{7-v-z}K_vPS_{6-z}M'15_{z1}M'16_{z2}$

Formula 9d $\qquad$ $Li_{7-v-z}CU_vPS_{6-z}M'15_{z1}M'16_{z2}$

Formula 9e $\qquad$ $Li_{7-v-z}Mg_vPS_{6-z}M'15_{z1}M'16_{z2}$

Formula 9f $\qquad$ $Li_{7-v-z}Ag_vPS_{6-z}M'15_{z1}M'16_{z2}$

wherein in these Formulae, M'15 and M'16 may each independently be F, Cl,

Br, or I,

$0 < v \leq 0.7$, $0 < z < 2$, $0 \leq z1 < 1$, $0 < z2 < 2$, and $z = z1 + z2$.

Regarding Formulae 9a to 9f, the following conditions may each independently be satisfied: for example, $0 < v \leq 0.7$, $0 < z1 < 2$, $0 \leq z2 \leq 0.5$, $0 < z < 2$, and $z = z1 + z2$; $0 < v \leq 0.5$, $0 < z1 < 2$, $0 \leq z2 \leq 0.5$, $0 < z < 2$, and $z = z1 + z2$; $0 < v \leq 0.3$, $0 < z1 \leq 1.5$, $0 \leq z2 \leq 0.5$, $0.2 \leq z \leq 1.8$, and $z = z1 + z2$; $0 < v \leq 0.05$, $0 < z1 \leq 1.5$, $0 \leq z2 \leq 0.2$, $1.0 \leq z \leq 1.8$, and $z = z1 + z2$, for example, $0 < v \leq 0.05$, $0 < z1 \leq 1.5$, $0 \leq z2 \leq 0.2$, $1.0 \leq z \leq 1.5$, and $z = z1 + z2$. In Formula 9a, $v = 0$.

The compound represented by Formula 8 may be, for example, a compound represented by one of the following formulae:

$Li_{7-z}PS_{6-z}F_{z1}$, $Li_{7-z}PS_{6-z}Cl_{z1}$, $Li_{7-z}PS_{6-z}Br_{z1}$, $Li_{7-z}PS_{6-z}I_{z1}$, $Li_{7-z}PS_{6-z}F_{z1}Cl_{z2}$, $Li_{7-z}PS_{6-z}F_{z1}Br_{z2}$, $Li_{7-z}PS_{6-z}F_{z1}I_{z2}$, $Li_{7-z}PS_{6-z}Cl_{z1}Br_{z2}$, $Li_{7-z}PS_{6-z}Cl_{z1}I_{z2}$, $Li_{7-z}PS_{6-z}Cl_{z1}F_{z2}$, $Li_{7-z}PS_{6-z}Br_{z1}I_{z2}$, $Li_{7-z}PS_{6-z}Br_{z1}F_{z2}$, $Li_{7-z}PS_{6-z}Br_{z1}Cl_{z2}$, $Li_{7-z}PS_{6-z}I_{z1}F_{z2}$, $Li_{7-z}PS_{6-z}I_{z1}Cl_{z2}$, $Li_{7-z}PS_{6-z}I_{z1}Br_{z2}$, $Li_{7-v-z}Na_vPS_{6-z}F_{z1}$, $Li_{7-v-z}Na_vPS_{6-z}Cl_{z1}$, $Li_{7-v-z}Na_vPS_{6-z}Br_{z1}$, $Li_{7-v-z}Na_vPS_{6-z}I_{z1}$, $Li_{7-v-z}Na_vPS_{6-z}F_{z1}Cl_{z2}$, $Li_{7-v-z}Na_vPS_{6-z}F_{z1}Br_{z2}$, $Li_{7-v-z}Na_vPS_{6-z}F_{z1}I_{z2}$, $Li_{7-v-z}Na_vPS_{6-z}Cl_{z1}Br_{z2}$, $Li_{7-v-z}Na_vPS_{6-z}Cl_{z1}I_{z2}$, $Li_{7-v-z}Na_vPS_{6-z}Cl_{z1}F_{z2}$, $Li_{7-v-z}Na_vPS_{6-z}Br_{z1}I_{z2}$, $Li_{7-v-z}Na_vPS_{6-z}Br_{z1}F_{z2}$, $Li_{7-v-z}Na_vPS_{6-z}Br_{z1}Cl_{z2}$, $Li_{7-v-z}Na_vPS_{6-z}I_{z1}F_{z2}$, $Li_{7-v-z}Na_vPS_{6-z}I_{z1}Cl_{z2}$, $Li_{7-v-z}Na_vPS_{6-z}I_{z1}Br_{z2}$, $Li_{7-v-z}K_vPS_{6-z}F_{z1}$, $Li_{7-v-z}K_vPS_{6-z}Cl_{z1}$, $Li_{7-v-z}K_vPS_{6-z}Br_{z1}$, $Li_{7-v-z}K_vPS_{6-z}I_{z1}$,
$Li_{7-2v-z}K_vPS_{6-z}F_z1Clz2$, $Li_{7-2v-z}K_vPS_{6-z}F_{z1}Brz2$, $Li_{7-2v-z}K_vPS_{6-z}F_{z1}I_{z2}$, $Li_{7-2v-z}K_vPS_{6-z}Cl_{z1}Br_{z2}$, $Li_{7-2v-z}K_vPS_{6-z}Cl_{z1}I_{z2}$, $Li_{7-2v-z}K_vPS_{6-z}Cl_{z1}F_{z2}$, $Li_{7-2v-z}K_vPS_{6-z}Br_{z1}I_{z2}$, $Li_{7-2v-z}K_vPS_{6-z}Br_{z1}F_{z2}$, $Li_{7-2v-z}K_vPS_{6-z}Br_{z1}Cl_{z2}$, $Li_{7-2v-z}K_vPS_{6-z}I_{z1}F_{z2}$, $Li_{7-2v-z}K_vPS_{6-z}I_{z1}Cl_{z2}$, $Li_{7-2v-z}K_vPS_{6-z}I_{z1}Br_{z2}$,
$Li_{7-v-z}Cu_vPS_{6-z}F_{z1}$, $Li_{7-v-z}Cu_vPS_{6-z}Cl_{z1}$, $Li_{7-v-z}Cu_vPS_{6-z}Br_{z1}$, $Li_{7-v-z}Cu_vPS_{6-z}I_{z1}$, $Li_{7-v-z}CU_vPS_{6-z}F_{z1}Clz2$, $Li_{7-v-z}Cu_vPS_{6-z}F_{z1}Br_{z2}$, $Li_{7-v-z}Cu_vPS_{6-z}F_{z1}I_{z2}$, $Li_{7-v-z}Cu_vPS_{6-z}Cl_{z1}Br_{z2}$, $Li_{7-v-z}Cu_vPS_{6-z}Cl_{z1}I_{z2}$, $Li_{7-v-z}Cu_vPS_{6-z}Cl_{z1}F_{z2}$, $Li_{7-v-z}Cu_vPS_{6-z}Br_{z1}I_{z2}$, $Li_{7-v-z}Cu_vPS_{6-z}Br_{z1}F_{z2}$, $Li_{7-v-z}Cu_vPS_{6-z}Br_{z1}Cl_{z2}$, $Li_{7-v-z}Cu_vPS_{6-z}I_{z1}F_{z2}$, $Li_{7-v-z}Cu_vPS_{6-z}I_{z1}Cl_{z2}$, $Li_{7-v-z}Cu_vPS_{6-z}I_{z1}Br_{z2}$,
$Li_{7-v-z}Mg_vPS_{6-z}F_{z1}$, $Li_{7-v-z}Mg_vPS_{6-z}Cl_{z1}$, $Li_{7-v-z}Mg_vPS_{6-z}Br_{z1}$, $Li_{7-v-z}Mg_vPS_{6-z}I_{z1}$, $Li_{7-v-z}Mg_vPS_{6-z}F_{z1}Cl_{z2}$, $Li_{7-v-z}Mg_vPS_{6-z}F_{z1}Br_{z2}$, $Li_{7-v-z}Mg_vPS_{6-z}F_{z1}I_{z2}$, $Li_{7-v-z}Mg_vPS_{6-z}Cl_{z1}Brz2$, $Li_{7-v-z}Mg_vPS_{6-z}Cl_{z1}I_{z2}$, $Li_{7-v-z}Mg_vPS_{6-z}Cl_{z1}F_{z2}$, $Li_{7-v-z}Mg_vPS_{6-z}Br_{z1}I_{z2}$, $Li_{7-v-z}Mg_vPS_{6-z}Br_{z1}F_{z2}$, $Li_{7-v-z}Mg_vPS_{6-z}Br_{z1}Cl_{z2}$, $Li_{7-v-z}Mg_vPS_{6-z}I_{z1}F_{z2}$, $Li_{7-v-z}Mg_vPS_{6-z}I_{z1}Cl_{z2}$, $Li_{7-v-z}Mg_vPS_{6-z}I_{z1}Br_{z2}$,
$Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$, $Li_{7-v-z}Ag_vPS_{6-z}F_{z1}Cl_{z2}$, $Li_{7-v-z}Ag_vPS_{6-z}F_{z1}Br_{z2}$, $Li_{7-v-z}Ag_vPS_{6-z}F_{z1}I_{z2}$, $Li_{7-v-z}Ag_vPS_{6-z}Cl_{z1}Br_{z2}$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$, $Li_{7-v-z}Ag_vPS_{6-z}Br_{z1}F_{z2}$, $Li_{7-v-z}Ag_vPS_{6-z}Br_{z1}Cl_{z2}$, $Li_{7-v-z}Ag_vPS_{6-z}I_{z1}F_{z2}$, $Li_{7-v-z}Ag_vPS_{6-z}I_{z1}Cl_{z2}$, and $Li_{7-v-z}Ag_vPS_{6-z}I_{z1}Br_{z2}$,
wherein in the formulae above, the following conditions may each independently be satisfied: $0 < v \leq 0.7$, $0 < z1 < 2$, $0 < z2 < 1$, $0 < z < 2$, and $z = z1 + z2$; for example, $0 < v \leq 0.7$, $0 < z1 < 2$, $0 \leq z2 \leq 0.5$, $0 < z < 2$, and $z = z1 + z2$; $0 < v \leq 0.3$, $0 < z1 \leq 1.5$, $0 \leq z2 \leq 0.5$, $0.2 \leq z \leq 1.8$, and $z = z1 + z2$; $0 < v \leq 0.05$, $0 < z1 \leq 1.5$, $0 \leq z2 \leq 0.2$, $1.0 \leq z \leq 1.8$, and $z = z1 + z2$; or $0 < v \leq 0.05$, $0 < z1 \leq 1.5$, $0 \leq z2 \leq 0.2$, $1.0 \leq z \leq 1.5$, and $z = z1 + z2$. When there is no v, z1 or z2 in the formulae above, $v = 0$, $z1 = 0$, or $z2 = 0$. For example, when $z1 = 0$, $z = z2$. For example, when $z2 = 0$, $z = z1$.

The compound represented by Formula 8 may belong to, for example, a cubic crystal system and, more specifically, to the F-43m space group. Additionally, the compound represented by Formula 8 may be an argyrodite-type sulfide having an argyrodite-type crystal structure. The compound represented by Formula 8 includes, for example, one or more of a monovalent cation element and a divalent cation element substituted for a portion of the lithium site in the argyrodite -type crystal structure, or includes a heterogeneous halogen element, or includes a substituted $SO_n$ anion in the halogen site, and thus, lithium ion conductivity may be further improved, and electrochemical stability to lithium metal may be further improved. "Argyrodite" or "argyrodite-type" as used herein means that the compound has a crystal structure isostructural with argyrodite, $Ag_8GeS_6$.

The compound represented by Formula 8 is, for example, $Li_6PS_5Cl$.

The sulfide-based solid-state electrolyte used herein may be an argyrodite-type compound including one or more of $Li_{7-x}PS_{6-x}Cl_x$, $0\leq x\leq2$, $Li_{7-x}PS_{6-x}Br_x$, $0\leq x\leq2$, or $Li_{7-x}PS_{6-x}I_x$ where x satisfies the condition of $0\leq x\leq2$. In particular, the sulfide-based solid-state electrolyte included in the solid-state electrolyte may be an argyrodite-type compound including one or more of $Li_6PS_5Cl$, $Li_6PS_5Br$, or $Li_6PS_5I$.

Examples of polymer solid-state electrolytes are polyethylene oxide, polypropylene oxide, polystyrene (PS), polyphosphazene, polysiloxane, polyvinylidene fluoride-co-hexafluoropropylene (PVDF-HFP), polyacrylonitrile (PAN), or a combination thereof. The ionic conductivity of this polymer solid-state electrolyte may be achieved by local segmental motion of the polymer. Polymer solid-state electrolytes may be prepared by mixing polyether with plasticizer salts and sometimes some liquid plasticizer. This electrolyte may be prepared into a thin film using a solvent evaporation coating method. However, it is not limited thereto, and any suitable polymer solid-state electrolyte available in the art may be used.

If necessary, the solid-state electrolyte layer may further include a binder. The binder included in the solid-state electrolyte layer 30 may be, for example, styrenebutadiene rubber (SBR), polytetrafluoroethylene, polyvinylidene fluoride, polyethylene, etc., but is not limited to these. The binder may be any suitable material that can be used as a binder in the relevant technical field.

The solid-state electrolyte layer 30 may be prepared by depositing using a known film formation method such as an aerosol deposition method, a cold spray method, or a sputtering method. In some embodiments, the solid-state electrolyte layer 30 may be prepared by pressing single particles of the solid-state electrolyte. In some embodiments, the solid-state electrolyte layer 30 may be prepared by mixing a solid-state electrolyte, a solvent, and a binder, applying the mixture, and drying and pressing.

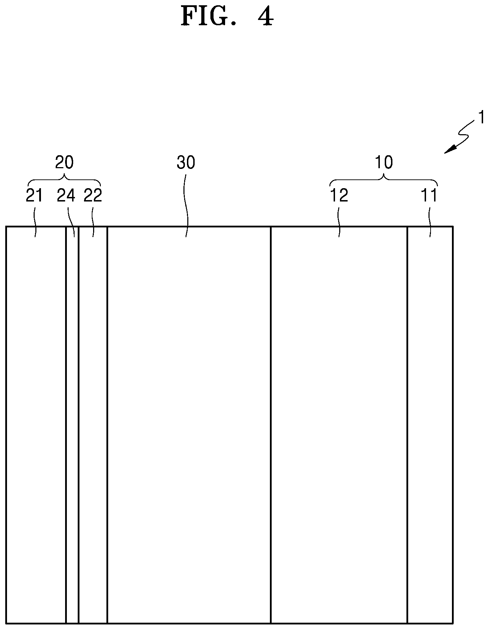

As shown in FIG. 4, a plating thin film (e.g., film) 24 may be disposed (e.g., formed) on a surface of the anode current collector 21. The thin film 24 may include an element that may form an alloy with lithium. Elements that may form an alloy with lithium may include, for example, gold, silver, zinc, tin, indium, silicon, aluminum, or bismuth. The thin film 24 may be composed of one of these metals or may be composed of alloy of several types of metals.

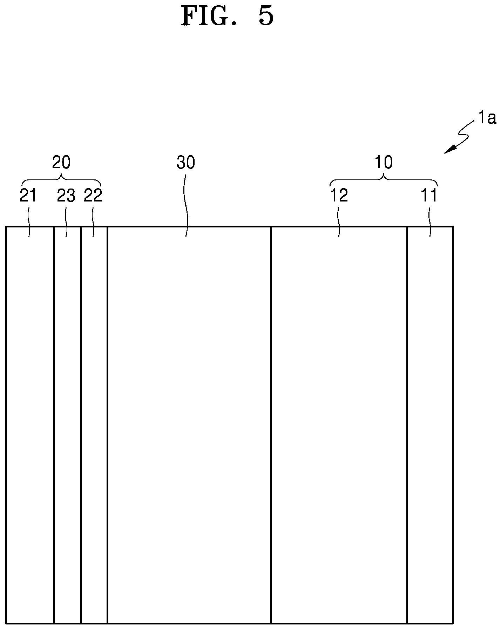

By the presence of the plating thin film 24 shown in FIG. 4, a precipitation form of a metal layer 23 shown in FIG. 5 may be further flattened, and the characteristics of the all-solid-state secondary battery 1 may be further improved. The metal layer 23 shown in FIG. 5 may be formed between the anode current collector 21 and the anode active material layer 22 by overcharging of the anode active material layer 22. Alternatively, the metal layer 23 shown in FIG. 5 is previously (i.e. prior to initial charging) formed between the anode current collector 21 and the anode active material layer 22.

The metal layer 23 shown in FIG. 5 may include lithium or a lithium alloy. That is, the metal layer 23 may function as a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like. The metal layer 23 shown in FIG. 5 may be formed of one of these alloys or lithium, or an alloy thereof.

A thickness of the metal layer 23 may be range from about 1 $\mu$m to about 200 $\mu$m, but is not particularly limited. When the thickness of the metal layer 23 less than 1 $\mu$m, the function of the metal layer 23 as a reservoir may not be sufficiently exhibited. When the thickness of the metal layer 23 is greater than 200 $\mu$m, the mass and volume of the all-solid-state secondary battery 1 may be increased, resulting in rather deteriorated characteristics. The metal layer 23 may be, for example, metal foil having a thickness within the above-described range.

A thickness of the thin film 24 may be from about 1 nm to about 500 nm, for example, about 10 nm to about 400 nm, about 30 nm to about 300 nm, or about 50 nm to about 200 nm, but is not limited thereto. When the thickness of the thin film 24 is within this range, the function of the thin film 24 is sufficiently exercised and the amount of lithium precipitated in the anode layer is appropriate, so that the characteristics of the all-solid-state secondary batteries 1 and 1a are improved. The thin film 24 may be formed on the anode current collector 21 by, for example, vacuum deposition, sputtering, or plating.

Method of preparing mixed solid-state ionic conductors

According to another aspect of the disclosure, a method of manufacturing a mixed solid-state ionic conductor includes preparing a precursor and a salt which are for forming a solid-state ionic conductor; providing a precursor mixture for forming a solid-state ionic conductor by performing mechanical milling on the precursor and salt for forming a solid-state ionic conductor; and molding the precursor mixture for forming the solid-state ionic conductor to prepare the mixed solid-state ionic conductor.

In an aspect, a method of preparing a mixed solid-state ionic conductor comprises:

providing a precursor and salt for forming a solid-state ionic conductor; mechanically milling the precursor and salt to provide a precursor mixture; and

molding the precursor mixture to thereby prepare the mixed solid-state ionic conductor.

The mixed solid-state ionic conductor may include a compound represented by Formula 1 and a salt represented by Formula 2:

Formula 1 $\quad M_aM'_bX_cY'_dZ_e$

wherein

M may be an alkali metal having an oxidation number of +1,

M' may be one or more of a metal cation having an oxidation number of +2, +3, +4, +5, or +6,
X may be one or more of a halogen anion,
Y' may be an anion having an oxidation number of -1,
Z may be an anion having an oxidation number of -3,
$0.5 \leq a \leq 7$, $0.5 \leq b \leq 2$, $0 < c \leq 6$, $0 \leq d \leq 6$, $0 \leq e \leq 6$, and

$0 < c + d + e \leq 6$,

Formula 2 $\quad M''_f(PO_4)_g$

M" may be the same metal cation as M' in Formula 1 or a different metal cation having an ionic radius that is within $\pm$ 10% of an ionic radius of M', and
$0 < f \leq 3$, and $0 < g \leq 10$.

The method of manufacturing the mixed solid-state ionic conductor allows the preparation of a solid-state ionic conductor which has improved ionic conductivity, electrochemical stability over a wide potential window when applied as a solid-state electrolyte in an electrochemical device, improved cycle stability with a metal electrode including lithium, and reversible development of the designed cathode capacity.

When preparing a precursor mixture for forming a solid-state ionic conductor, an M precursor, an M' precursor, an X precursor, a Y' precursor salt, a Z precursor salt, and the salt of Formula 2 may be mixed together. The M precursor may be a precursor of an alkali metal element with an oxidation number of +1, and the M' precursor may be a precursor of a metal element with an oxidation number of +3 or +4.

The M precursor and M' precursor may include halides such as chlorides, oxides, nitrides, oxynitrides, nitrates, hydroxides, and carbonates of M metal and M' metal, respectively. For example, the M' precursor may include chlorides, oxides, nitrides, oxynitrides, nitrates, hydroxides, and carbonates of an element of Ti, Zr, Hf, V, Nb, Ta, Al, Ga, In, La, Ce, Pr, Nd, Pm, Sm, Eu, Gd, Tb, Dy, Ho, Er, Tm, Yb, Y, Lu, or a combination thereof. For example, the M' precursor may include chlorides of Ti, Zr, Hf, V, Nb, Ta, Al, Ga, In, La, Ce, Pr, Nd, Pm, Sm, Eu, Gd, Tb, Dy, Ho, Er, Tm, Yb, Y, Lu, or a combination thereof. In some embodiments, the Y' precursor salt may be a salt including one or more of anion of $SO_3^-$, $CH_3COO^-$, $CN^-$, $NO_3^-$, $NO^-$, $H_2PO_4^-$, $PF_6^-$, $OH^-$, $BF_4^-$, $N(CF_3SO_2)_2^-$, $CF_3CO_2^-$, $CF_3SO_3^-$, $C(CF_3SO_2)_3^-$, $HCO_3^-$, $ClO_4^-$, $HSO_4^-$, or $SCN^-$. The Z precursor salt may be a salt that includes one or more of anions of $(BO_4)^{3-}$, $(BO_3)^{3-}$, $(PO_4)^{3-}$, $[Fe(CN)_6]^{3-}$, or $[Ag(S_2O_3)_2]^{3-}$. In some embodiments, M", which is the cation of the salt of Formula 2, may be the same metal cation as M' in Formula 1 or a different metal cation having a difference in ionic radius from M' within $\pm$10%.

The precursors and salts for forming a solid-state ionic conductor may be brought in an appropriate amount, for example, a stoichiometric amount into contact to prepare a mixture. Mechanical milling is performed on the mixture.

The mechanical milling may be performed using ball-mill, airjet-mill, bead mill, roll-mill, planetary mill, hand milling, high energy ball mill, planetary mill ball mill, stirred ball mill, vibrating mill, mechanofusion milling, shaker milling, planetary milling, attritor milling, disk milling, shape milling, nauta milling, nobilta milling, high speed mix, or a combination thereof. For example, the mechanical milling may be planetary milling and may be performed at room temperature. Molding may be further included after the mechanical milling is performed.

After the mechanical milling, a resting process may be further included. For example, the resting process may be performed at room temperature for 1 minute to 10 minutes.

Hereinafter, examples and comparative examples of the disclosure will be described. However, the following example is only an example of the disclosure, and the disclosure is not limited to the following example.

EXAMPLES

(Mixed solid-state ionic conductor)

Example 1: Preparation of mixed solid-state ionic conductor of $6Li_2ZrCl_6$ and $Zr_3(PO_4)_4$

$ZrCl_4$ and $Li_3(PO_4)$ were added to the reactor in a stoichiometric ratio of 9:4 and mixed to prepare a precursor mixture for forming a solid-state ionic conductor. The precursor mixture for forming the solid-state ionic conductor was repeatedly mixed at 600 rotations per minute (rpm) for 15 minutes using a planetary mill (Pulverisette 7 premium line) into which 10 millimeters (mm) diameter zirconia (YSZ) balls were loaded, and rested for 5 minutes. This cycle was carried out for a total of 24 hours to obtain a precursor mixture. The precursor mixture was placed in a pelletizer with a diameter of 1 inch, and a weight of 5 tons was applied thereto for 2 minutes using uniaxial pressure to produce a circular disk-shaped mixed solid-state ionic conductor pellet of $6Li_2ZrCl_6$ and $Zr_3(PO_4)_4$ (pellet).

Example 2: Preparation of mixed solid-state ionic conductor of $4.75Li_2ZrCl_6$, $0.75Zr_3(PO_4)_3$, and $0.25 ZrCl_4$ impurity

Mixed solid-state ionic conductor pellets of $4.5Li_2ZrCl_6$, $0.75Zr_3(PO_4)_3$, and 3 wt% $ZrCl4$ impurity were prepared in the same manner as in Example 1, except that $ZrCl_4$ and $Li_3(PO_4)$ were adjusted to be in a stoichiometric ratio of 7:3 in the reactor.

Example 3: Preparation of mixed solid-state ionic conductor of $15LiTaCl_6$ and $Ta_3(PO_4)_5$

Mixed solid-state ionic conductor pellets of $15LiTaCl_6$ and $Ta_3(PO_4)_3$ were prepared in the same manner as in Example 1, except that $TaCl_5$ and $Li_3(PO_4)$ were adjusted to be in a stoichiometric ratio of 18:5 in the reactor.

Example 4: Preparation of mixed solid-state ionic conductor of $Li_3YCl_6$ and $YPO_4$

Mixed solid-state ionic conductor pellets of $Li_3YCl_6$ and $YPO_4$ were prepared in the same manner as in Example 1, except that $YCl_3$ and $Li_3(PO_4)$ were adjusted to be in a stoichiometric ratio of 1:1 in the reactor.

Example 5: Preparation of mixed solid-state ionic conductor of $Li_2ZrCl_6$, $Zr_3(PO_4)_4$, and $LaPO_4$

Mixed solid-state ionic conductors of $Li_2ZrCl_6$, $Zr_3(PO_4)_4$, and $LaPO_4$ were prepared in the same manner as in Example 1, except that $ZrCl_4$, $LiCl$, and $La(PO_4)$ were adjusted to be in a stoichiometric ratio of 45:20:1 in the reactor.

Comparative Example 1: Production of solid-state ionic conductor of $Li_2ZrCl_6$

Solid-state ionic conductor pellets of $Li_2ZrCl_6$ were prepared in the same manner as in Example 1, except that $ZrCl_4$ and $LiCl$ were adjusted to be in a stoichiometric ratio of 1:2 in the reactor.

Comparative Example 2: Production of solid-state ionic conductor of $LiTaCl_6$

Solid-state ionic conductor pellets of $LiTaCl_6$ were prepared in the same manner as in Example 1, except that $TaCls$ and $LiCl$ were adjusted to be in a stoichiometric ratio of 1:1 in the reactor.

Comparative Example 3: Preparation of solid-state ionic conductor of $Li_3YCl_6$

Solid-state ionic conductor pellets of $Li_3YCl_6$ were prepared in the same manner as in Example 1, except that $YCl_3$ and $LiCl$ were adjusted to be in a stoichiometric ratio of 1:3 in the reactor.

Comparative Example 4: Production of solid-state ionic conductor of $Li_3PO_4$

Solid-state ionic conductor pellets of $Li_3PO_4$ were prepared in the same manner as in Example 1, except that $Li_3(PO_4)$ was added to the reactor.

Comparative Example 5: Preparation of mixed solid-state ionic conductor of $Li_2ZrCl_6$ and $Li_{1.3}Al_{0.3}Ti_{1.7}(PO_4)_3$

Mixed solid-state ionic conductor pellets of $Li_2ZrCl_6$ and $Li_{1.3}Al_{0.3}Ti_{1.7}(PO_4)_3$ were prepared in the same manner as in Example 1, except that $ZrCl_4$, LiCl and $Li_{1.3}Al_{0.3}Ti_{1.7}(PO_4)_3$ were adjusted to be in a stoichiometric ratio of 1:2:0.2 in the reactor.

Comparative Example 6: Preparation of solid-state ionic conductor of $Li_{2.2}Ho_{0.2}Zr_{0.8}Cl_6$

Solid-state ionic conductor pellets were prepared in the same manner as in Example 1, except that LiCl, $HoCl_3$, and $ZrCl_4$ were adjusted to be in a stoichiometric ratio of 2.2:0.2:0.8 in the reactor.

Comparative Example 7: Preparation of solid-state ionic conductor of $Li_6PS_5Cl$

Solid-state ionic conductor pellets were prepared in the same manner as in Example 1, except that $Li_2S$, $P_2S_5$, and LiCl were adjusted to be in a stoichiometric ratio of 5:1:2 in the reactor.

Comparative Example 8: Preparation of mixed solid-state ionic conductor of $6Li_2ZrCl_6$, $Zr_3(PO_4)_4$, and $Li_3PO_4$ impurity

Mixed solid-state ionic conductor pellets of $6Li_2ZrCl_6$, $Zr_3(PO_4)_3$, and 5 wt% $Li_3PO_4$ impurity was prepared in the same manner as in Example 1, except that $ZrCl_4$ and $Li_3(PO_4)$ were adjusted to be in a stoichiometric ratio of 9:5 in the reactor.

Comparative Example 9: Preparation of mixed solid-state ionic conductor of $4Li_2ZrCl_6$ and $Li_3PO_4$

Mixed solid-state ionic conductor pellets of $4Li_2ZrCl_6$ and $Li_3PO_4$ were prepared in the same manner as in Example 1, except that $ZrCl_4$, LiCl, and $Li_3(PO_4)$ were adjusted to be in a stoichiometric ratio of 4:8:1 in the reactor.

Comparative Example 10: Preparation of mixed solid-state ionic conductor of $8Li_2ZrCl_6$ and $Ca_3(PO_4)_2$

Mixed solid-state ionic conductor pellets of $8Li_2ZrCl_6$ and $Ca_3(PO_4)_2$ were prepared in the same manner as in Example 1, except that $ZrCl_4$, LiCl, and $Ca_3(PO_4)_2$ were adjusted to be in a stoichiometric ratio of 8:16:1 in the reactor.

(All-solid-state secondary battery)

Example 6: Manufacturing of all-solid-state secondary battery

(Cathode layer manufacturing)

A 10 $\mu$m thick copper current collector was placed on the bottom of a tubular cell case with an inner diameter of 13 mm, and a 20 $\mu$m thick indium (In)-deposited foil was placed on a surface of the copper current collector to prepare an anode layer.

(Manufacturing of anode layer/solid-state electrolyte layer laminate)

On the anode layer, 70 milligrams (mg) of $Li_6PS_5Cl$ solid-state ionic conductor pellets (Mitusi, S33) were placed as a first solid-state electrolyte layer and the pressure was evenly distributed thereon. On the first solid-state electrolyte layer, 30 mg of the mixed solid-state ionic conductor pellet of $6Li_2ZrCl_6$ and $Zr_3(PO_4)_4$ prepared in Example 1 was placed as a second solid-state electrolyte layer and the pressure was evenly distributed thereon, and then, 250 megaPascals (MPa) was applied at 25°C by cold isostatic pressing (CIP) to prepare a stack having a copper current collector layer/indium (In) layer/$Li_6PS_5Cl$ first solid-state electrolyte layer/$6Li_2ZrCl_6$ and $Zr_3(PO_4)_4$ second solid-state electrolyte layer (thickness: about 300 $\mu$m).

(Manufacturing of cathode layer)

$LiNi_{0.9}Co_{0.07}Mn_{0.03}O_2$ (NCM), which is the cathode active material, the mixed solid-state ionic conductor pellet prepared in Example 1, which is the solid-state electrolyte, and carbon nanofiber (CNF), which is the conductive agent, were mixed at a mass ratio of 85:23:1. 42 mg of the mixture was placed on an aluminum foil current collector with a thickness of 18 $\mu$m, thereby completing the preparation of a cathode layer.

(Manufacturing of all-solid-state secondary battery)

The cathode layer was placed on the stack of the anode layer/solid-state electrolyte layer and a weight of 4 tons was applied thereon for 2 minutes to manufacture a torque cell type all-solid-state secondary battery.

Examples 7 to 10: Manufacturing of all-solid-state secondary batteries

All-solid-state secondary batteries were manufactured in the same manner as in Example 6, except that the mixed solid-state ionic conductor pellets prepared according to Examples 2 to 5 were used as the second solid-state electrolyte when preparing the stack of the anode layer/solid-state electrolyte layer, and as the solid-state electrolyte when manufacturing the cathode layer.

Comparative Examples 11 to 20: Manufacturing of all-solid-state secondary batteries

All solid-state secondary batteries were manufactured in the same manner as in Example 6, except that the (mixed) solid-state ionic conductor pellets prepared in Comparative Examples 1 to 10 were used as the second solid-state electrolyte when manufacturing the anode layer/solid-state electrolyte layer stack, and as the solid-state electrolyte when manufacturing the cathode layer.

Evaluation Example 1: XRD analysis

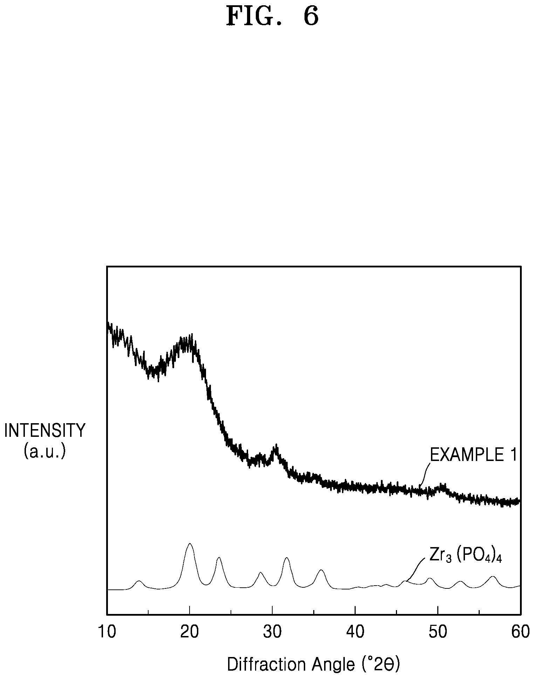

An XRD spectrum analysis using CuKα ray was performed on the mixed solid-state ionic conductor prepared in Example 1 and $Zr_3(PO_4)_4$. The XRD spectrum analysis was conducted at 1°/min with a diffraction angle, $2\theta$, ranging from 10°$2\theta$ to 60°$2\theta$. Results thereof are shown in FIG. 6.

Referring to FIG. 6, the mixed solid-state ionic conductor prepared in Example 1 has a major peak in the area where the diffraction angle $2\theta$ is 15°$2\theta$ to 25°$2\theta$, and a minor peak in the area where the diffraction angle $2\theta$ is 25°$2\theta$ to 35°$2\theta$. This result was identical to the XRD spectrum of $Zr_3(PO_4)_4$.

From this result, it was confirmed that the mixed solid-state ionic conductor prepared in Example 1 includes $Zr_3(PO_4)_4$.

Evaluation Example 2: Interfacial resistance experiment

A lithium foil with a thickness of 8 millimeters (mm) was placed on a surface of the (mixed) solid-state ionic conductor pellets prepared in Example 1 and Comparative Example 1, and 250 MPa was applied thereon at 25°C by CIP. A lithium electrode was attached to another surface of the pellets in the same manner to prepare a lithium symmetry cell with a structure of the lithium/(mixed) solid-state ionic conductor pellet/lithium. Current collectors were respectively placed on the lithium electrodes disposed on the surfaces of the pellets, and while sealing the symmetrical cell, a portion of each of the current collectors was protruded outside the sealed symmetrical cell and used as an electrode terminal. The interfacial resistance of the pellets was measured using the prepared symmetric cell.

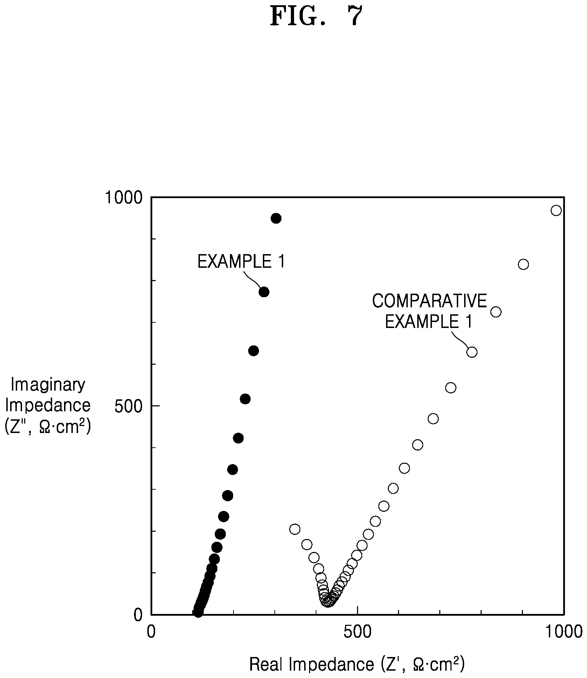

The impedance of the symmetrical cell was measured using the 2-probe method using Biologic VMP3 as an impedance analyzer. Impedance measurements were conducted in a dry-room atmosphere with an amplitude of 200 millivolts (mV), a frequency in the range of 1 Hertz (Hz) to 1 megaHertz (MHz), and a dew point of -60 °C at 25 °C. Interfacial resistance was measured from the size of the arc of the Nyquist plot for the impedance measurement results. Results are shown in FIG. 7.

Referring to FIG. 7, the interfacial resistance of the solid-state ionic conductor prepared in Comparative Example 1 was 430 $\Omega \cdot cm^2$ or less. The interfacial resistance of the mixed solid-state ionic conductor prepared in Example 1 was 120 $\Omega \cdot cm^2$ or less and was significantly reduced by about 72.1% compared to the solid-state ionic conductor prepared in Comparative Example 1.

Evaluation Example 3: Ion conductivity and activation energy experiment

The (mixed) solid-state ionic conductor pellets with a thickness of about 1000 μm prepared in Example 1 and Comparative Example 1 were prepared. Platinum (Pt) paste with a thickness of 20 nm was deposited by sputtering on the two surfaces of the (mixed) solid-state ionic conductor pellets to form a platinum (Pt) electrode. Wires were connected to platinum (Pt) electrodes on the surfaces of the specimen, and analysis was performed thereon using electrochemical impedance spectroscopy (EIS).

EIS analysis was performed with an amplitude of approximately 10 mV and a frequency ranging from 1 Hz to $10^6$ Hz. As an impedance analyzer, a 2-probe (potentiostat/galvanostat and a 1455 frequency response analyzer (FRA) multichannel test module, Solartron Analytical, UK) was used as an impedance analyzer. The impedance of the pellet was measured at room temperature (25°C) using the probe method. Resistance values were obtained from the arc of the Nyquist plot for the impedance measurement results, from which conductivity was calculated by correcting the electrode area and pellet thickness. The results are shown in Table 1.

Table 1

| | (Mixed) solid-state ionic conductor composition | Impurities (% by weight)* | Ion conductivity (Scm-1) |
|---|---|---|---|
| Example 1 | $6Li_2ZrCl_6 + Zr_3(PO_4)_4$ | - | $2.0 \times 10^3$ |
| Example 2 | $4.5Li_2ZrCl_6 + 0.75Zr_3(PO_4)_3$ | $ZrCl_4$ (3 wt%) | $1.3 \times 10^{-3}$ |
| Example 3 | $15LiTaCl_6 + Ta_3(PO_4)_5$ | - | $1.7 \times 10^{-3}$ |
| Example 4 | $Li_3YCl_6 + YPO_4$ | - | $8.1 \times 10^{-4}$ |
| Example 5 | $Li_2ZrCl_6 + Zr_3(PO_4)_4 + LaPO_4$ | - | $1.0 \times 10^{-3}$ |
| Comparative Example 1 | $Li_2ZrCl_6$ | - | $5.1 \times 10^{-4}$ |
| Comparative Example 2 | $LiTaCl_6$ | - | $5.0 \times 10^{-4}$ |
| Comparative Example 3 | $Li_3YCl_6$ | - | $2.0 \times 10^{-4}$ |
| Comparative Example 4 | $Li_3PO_4$ | - | $2.8 \times 10^{-10}$ |
| Comparative Example 5 | $Li_2ZrCl_6 + Li_{1.3}A_{0.3}Ti_{1.7}(PO_4)_3$ | - | $1.6 \times 10^{-5}$ |
| Comparative Example 6 | $Li_{2.2}Ho_{0.2}Zr_{0.8}Cl_6$ | - | $1.2 \times 10^{-3}$ |
| Comparative Example 7 | $Li_6PS_5Cl$ | - | $1.3 \times 10^{-3}$ |
| Comparative Example 8 | $6Li_2ZrCl_6 + Zr_3(PO_4)_4$ | $Li_3PO_4$(5 wt%) | $6.6 \times 10^{-4}$ |
| Comparative Example 9 | $4Li_2ZrCl_6 + Li_3PO_4$ | - | $1.2 \times 10^{-5}$ |
| Comparative Example 10 | $8Li_2ZrCl_6 + Ca_3(PO_4)_2$ | - | $2.3 \times 10^{-6}$ |
| * wt% is based on 100 wt% of the total weight of the mixed solid-state ionic conductor. | | | |

Referring to Table 1, the ionic conductivity of each of the mixed solid-state ionic conductors prepared by Examples 1-5 was at least $8.1 \times 10^{-4}$ Scm$^{-1}$, which is greater than the ionic conductivity of the mixed solid-state ionic conductors prepared by Comparative Examples 5, 8, 9, and 10. Among these, the ionic conductivity of the mixed solid-state ionic conductor prepared in Example 1 was very high at $2.0 \times 10^{-3}$ Scm$^{-1}$. Additionally, the mixed solid-state ionic conductors prepared in Examples 1 to 5 had greater or equal ionic conductivities compared to the halide-based compound solid-state ionic conductors prepared in Comparative Examples 1 to 3, 6, and 7.

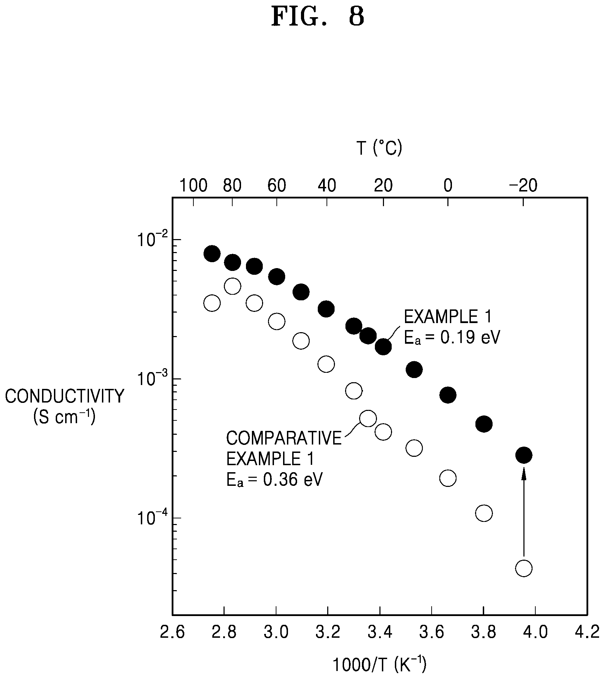

In addition, when measuring EIS, the activation energy ($E_a$) value for conductivity was calculated from the results measured by changing the temperature of the chamber in which each specimen was loaded. $E_a$ was calculated from the slope value by converting the conductivity values measured at each temperature in the range of 273 K to 398 K into the Arrhenius plot (Ln (oT) vs. 1/T) of Equation 1. In this regard, conductivity refers to ionic conductivity. Results are shown in FIG. 8.

Equation 1

$$\sigma T = A \exp(Ea/RT)$$

wherein
$E_a$ is the activation energy, T represents the absolute temperature, A represents the pre-exponential factor, R represents the gas constant, and $\sigma$ represents the conductivity.

Referring to FIG. 8, the activation energy of the solid-state ionic conductor prepared in Comparative Example 1 was 0.36 eV. The activation energy of the mixed solid-state ionic conductor prepared in Example 1 was 0.19 eV and was significantly reduced by about 47% compared to the solid-state ionic conductor prepared in Comparative Example 1.

Evaluation Example 4: Initial charging/discharging experiment

The all-solid-state secondary batteries manufactured in Example 6 and Comparative Example 17 were subjected to charging and discharging experiments in a constant temperature bath at 25 °C as follows.

Each all-solid-state secondary battery was charged at a constant current of 0.1 C until the battery voltage reached 4.0 V, and was charged at a constant voltage of 4.0 V until the current value reached 0.1 C. The C rate is a discharge rate of a cell, and is obtained by dividing a total capacity of the cell by a total discharge period of time of 1 hour, e.g., a C rate for a battery having a discharge capacity of 1.6 ampere-hours would be 1.6 amperes. The total capacity is determined by a discharge capacity on the 1st cycle. 0.1 C or C/10 refers to a current that will fully discharge the battery in 10 hours.

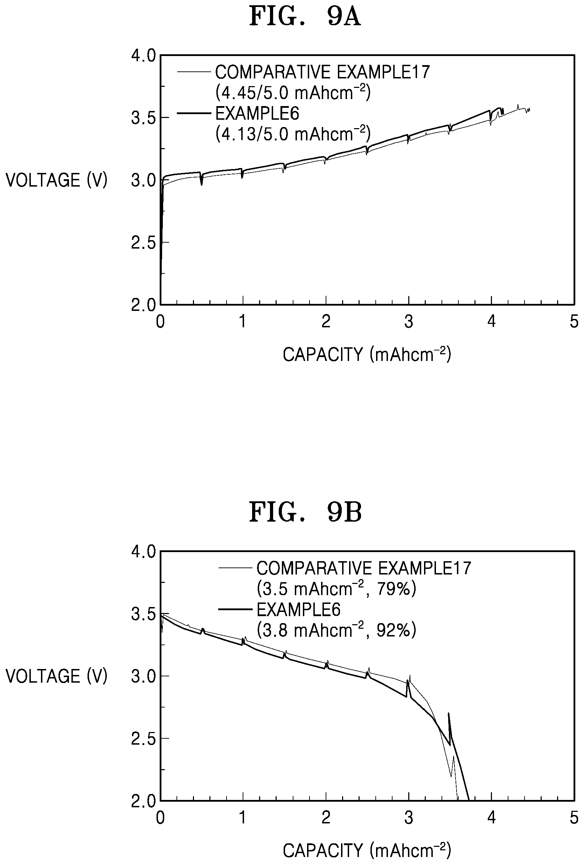

Next, discharging was performed at a constant current of 0.1 C until the battery voltage reached 2.0 V. Results of the initial charge and discharge experiment are shown in FIGS. 9A and 9B. In addition, the discharge capacity obtained from the experimental results was divided by the charge capacity and multiplied by 100%, and the value obtained was taken as Coulombic efficiency (%).

Referring to FIGS. 9A and 9B, the discharge capacity of the all-solid-state secondary battery manufactured in Example 6 was 3.8 mAhcm$^{-2}$, which was 0.3 mAhcm$^{-2}$ greater than that of the all-solid-state secondary battery manufactured in Comparative Example 17. In addition, the coulombic efficiency of the all-solid-state secondary battery manufactured in Example 6 was about 92% and was about 13% greater than that of the all-solid-state secondary battery manufactured in Comparative Example 17.

From this result, it was confirmed that the initial charging and discharging performance of the all-solid-state secondary battery including the mixed solid-state ionic conductor prepared in Example 1 was greater than the initial charging and discharging performance of the all-solid-state secondary battery including the $Li_6PS_5Cl$ halide-based compound prepared in Comparative Example 7 alone as the solid-state ionic conductor.

A mixed solid-state ionic conductor according to an aspect includes a compound represented by Formula 1 and a salt represented by Formula 2. Due to the mixing of metal phosphates excluding alkali metals, the mixed solid-state ionic conductor can provide a solid-state electrolyte, a cathode, and an electrochemical device, each of which has, compared to a case where a halide-based solid-state ionic conductor is used alone, higher ionic conductivity, improved charging and discharging characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A mixed solid-state ionic conductor comprising:

   a compound represented by Formula 1; and
   a salt represented by Formula 2,

   Formula 1          $M_aM'_bX_cY'_dZ_e$

   wherein in Formula 1,
   M is an alkali metal having an oxidation number of +1,
   M' is one or more of a metal cation having an oxidation number of +2, +3, +4, +5, or +6,
   X is one or more of a halogen anion having an oxidation number of -1,
   Y' is an anion having an oxidation number of -1,
   Z is an anion having an oxidation number of -3,
   $0.5 \leq a \leq 7$, $0.5 \leq b \leq 2$, $0 < c \leq 6$, $0 \leq d \leq 6$, $0 \leq e \leq 6$, and
   $0 < c + d + e \leq 6$, and

   Formula 2          $M''_f(PO_4)_g$

   wherein in Formula 2,
   M'' is the same metal cation as M' in Formula 1 or a different metal cation having an oxidation number of +2, +3, +4, +5, or +6 and having an ionic radius that is within $\pm$ 10% of an ionic radius of M',
   $0 < f \leq 3$, and $0 < g \leq 10$.

2. The mixed solid-state ionic conductor of claim 1, wherein the ionic radius of the metal cation of M' in Formula 1 is 70 picometers to 100 picometers.

3. The mixed solid-state ionic conductor of claims 1 or 2, wherein M' in Formula 1 is one or more of Ti, Zr, Hf, V, Nb, Ta, Al, Ga, In, La, Ce, Pr, Nd, Pm, Sm, Eu, Gd, Tb, Dy, Ho, Er, Tm, Yb, Y, or Lu.

4. The mixed solid-state ionic conductor of any of claims 1-3, wherein Y' in Formula 1 is one or more of $SO_3^-$, $CH_3COO^-$, $CN^-$, $NO_3^-$, $NO_2^-$, $H_2PO_4^-$, $PF_6^-$, $OH^-$, $BF_4^-$, $N(CF_3SO_2)_2^-$, $CF_3CO_2^-$, $CF_3SO_3^-$, $C(CF_3SO_2)_3^-$, $HCO_3^-$, $ClO_4^-$, $HSO_4^-$, or $SCN^-$; and/or
   wherein Z in Formula 1 is one or more of $(BO_4)^{3-}$, $(BO_3)^{3-}$, $(PO_4)^{3-}$, $[Fe(CN)_6]^{3-}$, or $[Ag(S_2O_3)_2]^{3-}$.

5. The mixed solid-state ionic conductor of any of claims 1-4, wherein the mixed solid-state ionic conductor does not include a first composition comprising a compound represented by Formula 3, a salt represented by Formula 4, or a combination thereof,

   Formula 3      $(M1)_p(X1)_q(Y'1)_r(Z1)_s$

   wherein in Formula 3,

   M1 is one or more of a metal cation having an oxidation number of +2, +3, +4, +5, or +6,
   X1 is one or more of a halogen anion having an oxidation number of -1,
   Y'1 is an anion with an oxidation number of -1,
   Z1 is an anion with an oxidation number of -3, and
   $0.5 \leq p \leq 2$, $0 < q \leq 6$, $0 \leq r \leq 6$, $0 \leq s \leq 6$, and $0 < q + r + s \leq 6$,

   Formula 4      $(M2)_t(PO_4)_v$

   wherein in Formula 4,
   M2 is an alkali metal having an oxidation number of +1,
   $0.5 \leq t \leq 7$, and $0 < v \leq 7/3$.

6. The mixed solid-state ionic conductor of any of claims 1-5, further comprising a first composition, wherein the first composition comprises one or more of a compound represented by Formula 3, a salt represented by Formula 4, or a combination thereof,

   Formula 3      $(M1)_p(X1)_q(Y'1)_r(Z1)_s$

   wherein in Formula 3,

   M1 is one or more of a metal cation having an oxidation number of +2, +3, +4, +5, or +6,
   X1 is one or more of a halogen anion having an oxidation number of -1,
   Y'1 is an anion with an oxidation number of -1,
   Z1 is an anion with an oxidation number of -3, and
   $0.5 \leq p \leq 2$, $0 < q \leq 6$, $0 \leq r \leq 6$, $0 \leq s \leq 6$, and $0 < q + r + s \leq 6$,

   Formula 4      $(M2)_t(PO_4)_v$

   wherein in Formula 4,

   M2 is an alkali metal having an oxidation number of +1,
   $0.5 \leq t \leq 7$, and $0 < v \leq 7/3$,
   preferably wherein the first composition is in an amount of greater than 0 weight percent and less than 5 weight percent, based on 100 weight percent of a total weight of the mixed solid-state ionic conductor.

7. The mixed solid-state ionic conductor of any of claims 1-6, wherein the compound of Formula 1 and the salt of Formula 2 are each a nanoparticle having a particle size of 1 nanometer to 100 nanometers; and/or
   wherein the mixed solid-state ionic conductor has a distorted rock-salt type crystal structure.

8.  The mixed solid-state ionic conductor of any of claims 1-7, wherein the compound of Formula 1 has an octahedral structure in which M' is a central metal cation coordinated by six halogen anions, wherein each halogen anion is optionally substituted with one or more of Y' or Z, and
    the salt of Formula 2 is located in a space around the octahedral structure.

9.  The mixed solid-state ionic conductor of any of claims 1-8, wherein the mixed solid-state ionic conductor has a layered crystal structure; and/or
    wherein an amount of the salt of Formula 2 is 5 weight percent to 30 weight percent, based on 100 weight percent of a total weight of the mixed solid-state ionic conductor.

10. The mixed solid-state ionic conductor of any of claims 1-9, wherein the mixed solid-state ionic conductor has an ionic conductivity of $8 \times 10^{-4}$ Siemens per centimeter to $3 \times 10^{-3}$ Siemens per centimeter at 25 °C.

11. A solid-state electrolyte comprising the mixed solid-state ionic conductor of any of claims 1-10.

12. A cathode comprising the mixed solid-state ionic conductor of any of claims 1-10.

13. An electrochemical device comprising:

    a cathode layer;
    an anode layer; and
    a solid-state electrolyte layer between the cathode layer and the anode layer,
    wherein the solid-state electrolyte of claim 11 is in at least one of the cathode layer, the anode layer, or the solid-state electrolyte layer;
    preferably wherein
    the cathode layer comprises the solid-state electrolyte, and
    the solid-state electrolyte layer comprises a first solid-state electrolyte comprising the solid-state electrolyte, and a second solid-state electrolyte comprising a sulfide-containing solid-state electrolyte, an oxide-containing solid-state electrolyte, a polymer solid-state electrolyte, or a combination thereof.

14. The electrochemical device of claim 13, wherein the electrochemical device is an electrochemical cell, a storage battery, a supercapacitor, a fuel cell, a sensor, or a color changing device.

15. A method of preparing a mixed solid-state ionic conductor, the method comprising:

    providing a precursor and salt for forming a solid-state ionic conductor;
    mechanically milling the precursor and salt to provide a precursor mixture; and
    molding the precursor mixture to thereby prepare the mixed solid-state ionic conductor of any of claims 1-10.

# FIG. 1A

M'   ◯ X   ⊙ Li   ● M"   △ $(PO_4)^{3-}$

# FIG. 1B

M'  ⬡ X  ⬡ Y' OR Z  ⊙ Li  ● M"  △ $(PO_4)^{3-}$

FIG. 2

# FIG. 3

# FIG. 4

# FIG. 5

1a

20
21 23 22
30
10
12 11

# FIG. 6

INTENSITY (a.u.)

EXAMPLE 1

$Zr_3 (PO_4)_4$

Diffraction Angle (°2θ)

# FIG. 7

# FIG. 8

## FIG. 9A

## FIG. 9B

Europäisches
Patentamt
European
Patent Office
Office européen
des brevets

**EUROPEAN SEARCH REPORT**

Application Number

EP 24 19 7931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/223904 A1 (CHOI WONSUNG [KR] ET AL) 14 July 2022 (2022-07-14) * paragraph [0002] - paragraph [0003] * * examples 1,11,12 * | 1-15 | INV. H01M10/0562 H01M10/052 H01M12/08 |
| A | XUMING LUO: "Ionic Conductivity Enhancement of Li 2 ZrCl 6 Halide Electrolytes via Mechanochemical Synthesis for All-Solid-State Lithium-Metal Batteries", APPLIED MATERIALS & INTERFACES, [Online] vol. 14, no. 44, 25 October 2022 (2022-10-25), pages 49839-49846, XP093162990, US ISSN: 1944-8244, DOI: 10.1021/acsami.2c14903 CAPLUS Retrieved from the Internet: URL:https://pubs.acs.org/doi/pdf/10.1021/a csami.2c14903> [retrieved on 2025-02-25] * abstract * | 1-15 | |
| A | DATABASE COMPENDEX [Online] ENGINEERING INFORMATION, INC., NEW YORK, NY, US; 12 October 2010 (2010-10-12), AOKI Y ET AL: "Thickness-induced proton-conductivity transition in amorphous zirconium phosphate thin films", XP002813046, Database accession no. E20104113291658 * abstract * | 1-15 | TECHNICAL FIELDS SEARCHED (IPC) H01M H05B H01B |

-/--

The present search report has been drawn up for all claims

| Place of search | Date of completion of the search | Examiner |
|---|---|---|
| Munich | 28 February 2025 | Kuhn, Tanja |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 24 19 7931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ISHIGURO YOSHITAKA ET AL: "TaCl 5 -glassified Ultrafast Lithium Ion-conductive Halide Electrolytes for High-performance All-solid-state Lithium Batteries", CHEMISTRY LETTERS, vol. 52, no. 4, 5 April 2023 (2023-04-05), pages 237-241, XP093253859, ISSN: 0366-7022, DOI: 10.1246/cl.220540 * page 237, column 1, paragraph 1 * ----- | 1-15 | |
| A | DARSHAN CHALISE ET AL: "Temperature dependence of 7Li NMR relaxation rates in Li3InCl6, Li3YCl6, Li1.48Al0.48Ge1.52(PO4)3 and LiPS5Cl", ARXIV.ORG, CORNELL UNIVERSITY LIBRARY, 201 OLIN LIBRARY CORNELL UNIVERSITY ITHACA, NY 14853, 22 March 2023 (2023-03-22), XP091466401, * abstract * ----- | 1-15 | |

TECHNICAL FIELDS
SEARCHED (IPC)

The present search report has been drawn up for all claims

| Place of search | Date of completion of the search | Examiner |
|---|---|---|
| Munich | 28 February 2025 | Kuhn, Tanja |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

.............................................................................................
& : member of the same patent family, corresponding
 document

EPO FORM 1503 03.82 (P04C01)

page 2 of 2

## ANNEX TO THE EUROPEAN SEARCH REPORT
## ON EUROPEAN PATENT APPLICATION NO.

EP 24 19 7931

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2025

| Patent document cited in search report | Publication date | Patent family member(s) | Publication date |
|---|---|---|---|
| US 2022223904 A1 | 14-07-2022 | KR 20220100297 A | 15-07-2022 |
| | | US 2022223904 A1 | 14-07-2022 |

For more details about this annex : see Official Journal of the European Patent Office, No. 12/82